# EUROPEAN PATENT APPLICATION

(11) **EP 4 838 884 A1**
(43) Date of publication of application: **11.11.2026**
(21) Application number: 24918078.7
(22) Date of filing: 05.09.2024
(51) Int. Cl.: H04N 19/13

(54) **ENCODING METHOD AND APPARATUS, AND DECODING METHOD AND APPARATUS**

(30) Priority: 18.01.2024 CN 202410080945; 08.02.2024 CN 202410176941
(71) Applicant: Huawei Technologies Co., Ltd., Shenzhen, Guangdong 518129 (CN)
(72) Inventor: YU, Dequan, Shenzhen, Guangdong 518129 (CN); ZHAO, Yin, Shenzhen, Guangdong 518129 (CN)
(74) Representative: Eisenführ Speiser
(86) International application number: PCT/CN2024/117239
(87) International publication number: WO 2025/152469

(57) **Abstract**

Embodiments of this application disclose encoding and decoding methods and apparatuses, and relate to the field of media technologies, to shorten an image decoding latency. The method includes: performing feature extraction on an input image to obtain a first feature map of the input image; determining N groups of second feature maps of the input image based on the first feature map; and performing entropy encoding on at least one group of second feature maps of the input image to obtain a bitstream, where N is a positive integer. It can be learned that, in the method provided in embodiments of this application, a part of feature maps of the input image may be encoded by using a progressive encoding method. In comparison with encoding all feature maps of the input image, encoding the part of feature maps of the input image can shorten an image encoding latency. In addition, a first group of second feature maps of the input image are feature maps having a largest channel entropy (variance) in the N groups of second feature maps of the input image, and a decoder side can obtain a complete reconstructed image based on the feature maps.

## Description

This application claims priorities to Chinese Patent Application No. 202410080945.2, filed with the China National Intellectual Property Administration on January 18, 2024 and entitled "ENCODING METHOD", and to Chinese Patent Application No. 202410176941.4, filed with the China National Intellectual Property Administration on February 8, 2024 and entitled "ENCODING AND DECODING METHOD AND APPARATUS", both of which are incorporated herein by reference in their entireties.

### TECHNICAL FIELD

Embodiments of this application relate to the field of media technologies, and in particular, to encoding and decoding methods and apparatuses.

### BACKGROUND

Currently, breakthroughs have been made in artificial intelligence (Artificial Intelligence, AI) image coding. In comparison with common image coding standards, compression efficiency is significantly improved based on AI image coding under same subjective quality. AI image coding is widely applied to various fields. For example, AI image coding can be applied to cloud storage, visual surveillance, autonomous vehicles and devices, image capturing, storage, and management, and real-time monitoring and media distribution of visual data.

Existing AI image coding is complex, and especially an entropy encoding and decoding process is time-consuming, which affects product implementation.

### SUMMARY

Embodiments of this application provide encoding and decoding methods and apparatuses, to shorten image encoding and decoding latencies. To achieve the foregoing objectives, the following technical solutions are used in embodiments of this application.

According to a first aspect, an embodiment of this application provides an encoding method. The method includes: performing AI encoding on an input image to obtain a first feature map of the input image; determining N groups of second feature maps of the input image based on the first feature map; and entropy encoding a first group of second feature maps in the N groups of second feature maps into a bitstream, where N is a positive integer.

It can be learned that, in the method provided in this embodiment of this application, a part of feature maps of the input image may be encoded by using a progressive encoding method. In comparison with encoding all feature maps of the input image, encoding the part of feature maps of the input image can shorten an image encoding latency. In addition, the first group of second feature maps of the input image are feature maps having a largest channel entropy (variance) in the N groups of second feature maps of the input image, and a decoder side can obtain a complete reconstructed image based on the feature maps.

For example, in a scenario in which a network environment is poor or decoding hardware resources are insufficient, the progressive encoding method is used in this embodiment of this application, not all the feature maps are needed, and the complete reconstructed image can be obtained through decoding based on only the first group of second feature maps, thereby shortening image encoding and decoding latencies.

In a possible implementation, any one of the N groups of second feature maps can be decoded to obtain the reconstructed image.

In a possible implementation, a second group of second feature maps in the N groups of second feature maps may be entropy encoded into the bitstream.

It can be learned that, in the method provided in this embodiment of this application, two groups of feature maps of the input image may be encoded by using the progressive encoding method. In comparison with encoding all the feature maps of the input image, encoding the part of feature maps of the input image can shorten the image encoding latency.

In a possible implementation, a third group of second feature maps in the N groups of second feature maps may be entropy encoded into the bitstream.

It can be learned that, in the method provided in this embodiment of this application, three groups of feature maps of the input image may be encoded by using the progressive encoding method. In comparison with encoding all the feature maps of the input image, encoding the part of feature maps of the input image can shorten the image encoding latency.

For example, in a scenario in which the network environment is good or the decoding hardware resources are sufficient, the progressive encoding method is used in this embodiment of this application. The complete reconstructed image can be obtained through decoding based on only the first group of second feature maps, and a reconstructed image with good image quality can be obtained through decoding based on a plurality of groups of second feature maps. Therefore, it can be learned that the progressive encoding method provided in this embodiment of this application can flexibly adapt to various network environments and hardware.

In a possible implementation, channel separation may be performed on the first feature map to obtain M second feature maps of the input image. The M second feature maps are grouped based on channel information of second feature maps of the input image to obtain the N groups of second feature maps, where M is a positive integer.

It can be learned that in the method provided in this embodiment of this application, after the feature map of the input image is obtained, channel separation may be performed on the feature map of the input image, to divide the feature map of the input image into a plurality of feature maps in a channel direction dimension, and encode a part of feature maps, of the input image, in the channel dimension. In comparison with encoding all the feature maps of the input image, encoding the part of feature maps of the input image by using the progressive encoding method can shorten the image encoding latency.

In a possible implementation, the channel information includes channel entropies and/or channel variances, the channel entropies are entropies of all elements in a channel, and the channel variances are variances of all the elements in the channel.

In a possible implementation, the channel information may further include at least one of a channel number or a channel group number. The channel number may be determined based on the channel entropy and/or the channel variance, and the channel group number may be determined based on the channel entropy and/or the channel variance.

It can be learned that in the method provided in this embodiment of this application, after the feature map of the input image is obtained, channel separation may be performed on the feature map of the input image based on information such as the channel entropy or the channel variance, to divide the feature map of the input image into the plurality of feature maps in the channel direction dimension, and encode the part of feature maps, of the input image, in the channel dimension. In comparison with encoding all the feature maps of the input image, encoding the part of feature maps of the input image by using the progressive encoding method can shorten the image encoding latency.

In a possible implementation, at least one of the N groups of second feature maps may be entropy encoded into the bitstream in descending order of channel entropies or channel variances.

It may be understood that a larger channel entropy or channel variance of the feature map indicates a higher probability of restoring the reconstructed image. Therefore, the at least one of the N groups of second feature maps may be entropy encoded into the bitstream in descending order of the channel entropies or the channel variances, so that encoding the part of feature maps of the input image by using the progressive encoding method can shorten the image encoding latency.

In a possible implementation, channel quantity information may be encoded into the bitstream. The channel quantity information indicates a channel quantity of the at least one group of second feature maps encoded into the bitstream. In this way, the decoder side can determine a channel quantity of each group of second feature maps in the bitstream by decoding the channel quantity information, to help the decoder side restore the feature maps from the bitstream.

For example, channel quantities of the first group of second feature maps, the second group of second feature maps, and the third group of second feature maps are: 4, 3, and 3. Channel quantity information of 4, 3, and 3 may be encoded into the bitstream.

In a possible implementation, first location information may be encoded into the bitstream. The first location information indicates locations, in the first feature map, of the at least one group of second feature maps encoded into the bitstream. In this way, the decoder side can determine locations of each group of second feature maps in the first feature map by decoding the first location information, to help the decoder side restore, from the bitstream, the feature map that is not grouped.

It should be noted that the decoder side needs to use the location of the second feature map in the first feature map to decode the second feature map. However, a location of the second feature map in the bitstream may be different from the location of the second feature map in the first feature map. Therefore, the first location information on which the locations, in the first feature map, of the at least one group of second feature maps encoded into the bitstream is recorded needs to be encoded into the bitstream.

For example, 10 second feature maps are obtained through channel separation from the first feature map, and locations of the 10 second feature maps in the first feature map are denoted as: 1, 2, 3, 4, 5, 6, 7, 8, 9, and 10. The 10 second feature maps are grouped, sorted, and encoded into the bitstream in a sequence of 2, 9, 4, 7, 1, 5, 3, 6, 10, and 8. In this case, first location information of 2, 9, 4, 7, 1, 5, 3, 6, 10, and 8 may be encoded into the bitstream. After obtaining the information, the decoder side may learn that a location, of a 1^{st} second feature map obtained through decoding, in the first feature map is 2, a location of a 2^{nd} second feature map in the first feature map is 9, ..., and a location of a 10^{th} second feature map in the first feature map is 8.

In a possible implementation, second location information may be encoded into the bitstream. The second location information indicates locations, in the bitstream, of the at least one group of second feature maps encoded into the bitstream. In this way, the decoder side can determine the locations of each group of second feature maps in the bitstream based on the second location information, to help the decoder side perform parallel decoding.

In a possible implementation, bitstream length information may be encoded into the bitstream. The bitstream length information indicates a length of the bitstream. In this way, the decoder side can determine the length of the bitstream based on the bitstream length information, to help the decoder side perform parallel decoding.

According to a second aspect, an embodiment of this application provides a decoding method. The method includes: performing entropy decoding on a bitstream to obtain a first group of second feature maps of an input image; and performing AI decoding on the first group of second feature maps to obtain a first reconstructed image of the input image, where the first group of second feature maps is a part of feature maps corresponding to the input image.

It can be learned that, in the method provided in this embodiment of this application, the reconstructed image may be determined based on the part of feature maps of the input image. In comparison with determining the reconstructed image based on all feature maps of the input image, determining the reconstructed image based on the part of feature maps of the input image by using a progressive decoding method can shorten an image decoding latency. In addition, the first group of second feature maps of the input image are feature maps having a largest channel entropy (variance) in the second feature maps of the input image, and a decoder side can obtain the complete reconstructed image based on the feature maps.

For example, in a scenario in which a network environment is poor or decoding hardware resources are insufficient, the progressive decoding method is used in this embodiment of this application, the complete reconstructed image can be obtained through decoding based on only the first group of second feature maps.

It should be noted that the first reconstructed image is not a partial image of the input image, but a reconstructed image that has a same size as the input image but has different image quality.

In a possible implementation, entropy decoding may be performed on the bitstream to obtain a second group of second feature maps of the input image; and AI decoding may be performed on the first group of second feature maps and the second group of second feature maps to obtain a second reconstructed image of the input image.

In a possible implementation, entropy decoding may be performed on the bitstream to obtain a third group of second feature maps of the input image; and AI decoding may be performed on the first group of second feature maps, the second group of second feature maps, and the third group of second feature maps to obtain a third reconstructed image of the input image.

For example, in a scenario in which the network environment is good or the decoding hardware resources are sufficient, the progressive decoding method is used in this embodiment of this application. The complete reconstructed image can be obtained through decoding based on only the first group of second feature maps, and a reconstructed image with good image quality can be obtained through decoding based on a plurality of groups of second feature maps. Therefore, it can be learned that the progressive decoding method provided in this embodiment of this application can flexibly adapt to various network environments and hardware.

In a possible implementation, image quality of the second reconstructed image is better than image quality of the first reconstructed image, and image quality of the third reconstructed image is better than image quality of the second reconstructed image.

The image quality is represented by any one of the following variables: a peak signal-to-noise ratio (peak signal-to-noise ratio, PSNR), a multi-scale structural similarity index measure (multi-scale structural similarity index measure, MS-SSIM), or a learned perceptual image patch similarity (learned perceptual image patch similarity, LPIPS).

In a possible implementation, the bitstream may be decoded to obtain channel quantity information. The channel quantity information indicates a channel quantity of at least one group of second feature maps obtained through decoding. AI decoding is performed on the first group of second feature maps based on the channel quantity information to obtain the first reconstructed image.

For example, channel quantities of the first group of second feature maps, the second group of second feature maps, and the third group of second feature maps are: 4, 3, and 3. Channel quantity information of 4, 3, and 3 may be encoded into the bitstream. Correspondingly, after obtaining the channel quantity information through decoding, the decoder side may learn that the first group of second feature maps of the input image can be decoded only after second feature maps of four channels are obtained through decoding in a first time of decoding, the second group of second feature maps of the input image can be decoded only after second feature maps of four channels are obtained through decoding in a second time of decoding, and the third group of second feature maps of the input image can be decoded only after second feature maps of three channels are obtained through decoding in a third time of decoding.

In a possible implementation, the bitstream may be decoded to obtain first location information. The first location information indicates locations, of the at least one group of second feature maps obtained through decoding, in a first feature map of the input image. AI decoding may be performed on the first group of second feature maps based on the first location information to obtain the first reconstructed image.

For example, 10 second feature maps are obtained through channel separation from the first feature map, and locations of the 10 second feature maps in the first feature map are denoted as: 1, 2, 3, 4, 5, 6, 7, 8, 9, and 10. The 10 second feature maps are grouped, sorted, and encoded into the bitstream in a sequence of 2, 9, 4, 7, 1, 5, 3, 6, 10, and 8. In this case, first location information of 2, 9, 4, 7, 1, 5, 3, 6, 10, and 8 may be encoded into the bitstream. After obtaining the information, the decoder side may learn that a location, of a 1^{st} second feature map obtained through decoding, in the first feature map is 2, a location of a 2^{nd} second feature map in the first feature map is 9, ..., and a location of a 10^{th} second feature map in the first feature map is 8.

The 1^{st} second feature map obtained through decoding is placed at the location 2 in the first feature map to perform image restoration, the 2^{nd} second feature map obtained through decoding is placed at the location 9 in the first feature map to perform image restoration, ..., and the 10^{th} second feature map obtained through decoding is placed at the location 8 in the first feature map to perform image restoration.

In a possible implementation, the bitstream may be decoded to obtain second location information. The second location information indicates locations, of the at least one group of second feature maps obtained through decoding, in the bitstream. Bit data corresponding to the first group of second feature maps in the bitstream is determined based on the second location information, and entropy decoding is performed on the corresponding bit data to obtain the first group of second feature maps.

For example, corresponding locations of bit data of the first group of second feature maps, the second group of second feature maps, and the third group of second feature maps in the bitstream are: A1 to A2, A3 to A4, and A5 to A6. Second location information of A1 to A2, A3 to A4, and A5 to A6 may be encoded into the bitstream. Correspondingly, after obtaining the second location information through decoding, the decoder side may learn that the first group of second feature maps may be obtained by decoding bit data at the locations A1 to A2 in the bitstream, the second group of second feature maps may be obtained by decoding bit data at the locations A3 to A4 in the bitstream, and the third group of second feature maps may be obtained by decoding bit data at the locations A5 to A6 in the bitstream.

In a possible implementation, the bitstream may be decoded to obtain bitstream length information of the bitstream. The bitstream length information indicates a length of the bitstream. AI decoding is performed on the first group of second feature maps based on the bitstream length information to obtain the first reconstructed image.

For example, decoding duration may be estimated based on the length of the bitstream. When the estimated decoding duration is greater than preset duration, the progressive decoding method is used, that is, entropy decoding is performed on the bitstream to obtain a part of second feature maps of the input image. AI decoding is performed on the part of second feature maps to obtain the reconstructed image of the input image.

According to a third aspect, an embodiment of this application provides an encoding apparatus. The apparatus includes an encoding unit and a determining unit. The encoding unit is configured to perform AI encoding on an input image to obtain a first feature map of the input image. The determining unit is configured to determine N groups of second feature maps of the input image based on the first feature map, where N is a positive integer. The encoding unit is further configured to entropy encode a first group of second feature maps in the N groups of second feature maps into a bitstream.

In a possible implementation, the encoding unit is further configured to entropy encode a second group of second feature maps in the N groups of second feature maps into the bitstream.

In a possible implementation, the encoding unit is further configured to entropy encode a third group of second feature maps in the N groups of second feature maps into the bitstream.

In a possible implementation, the determining unit is specifically configured to: perform channel separation on the first feature map to obtain M second feature maps of the input image, where M is a positive integer; and group the M second feature maps based on channel information of second feature maps of the input image to obtain the N groups of second feature maps.

In a possible implementation, the encoding unit is further configured to entropy encode at least one of the N groups of second feature maps into the bitstream in descending order of channel entropies or channel variances.

In a possible implementation, the encoding unit is further configured to encode channel quantity information into the bitstream. The channel quantity information indicates a channel quantity of the at least one group of second feature maps encoded into the bitstream.

In a possible implementation, the encoding unit is further configured to encode first location information into the bitstream. The first location information indicates locations, in the first feature map, of the at least one group of second feature maps encoded into the bitstream.

In a possible implementation, the encoding unit is further configured to encode second location information into the bitstream. The second location information indicates locations, in the bitstream, of the at least one group of second feature maps encoded into the bitstream.

In a possible implementation, the encoding unit is further configured to encode bitstream length information into the bitstream. The bitstream length information indicates a length of the bitstream.

According to a fourth aspect, an embodiment of this application provides a decoding apparatus. The apparatus includes a decoding unit and a reconstruction unit. The decoding unit is configured to perform entropy decoding on a bitstream to obtain a first group of second feature maps of an input image, and the first group of second feature maps is a part of feature maps corresponding to the input image. The reconstruction unit is configured to perform AI decoding on the first group of second feature maps to obtain a first reconstructed image of the input image.

In a possible implementation, the decoding unit is further configured to perform entropy decoding on the bitstream to obtain a second group of second feature maps, and the second group of second feature maps is a part of feature maps corresponding to the input image.

In a possible implementation, the reconstruction unit is further configured to perform AI decoding on the first group of second feature maps and the second group of second feature maps to obtain a second reconstructed image of the input image.

In a possible implementation, the decoding unit is further configured to perform entropy decoding on the bitstream to obtain a third group of second feature maps, and the third group of second feature maps is a part of feature maps corresponding to the input image.

In a possible implementation, the reconstruction unit is further configured to perform AI decoding on the first group of second feature maps, the second group of second feature maps, and the third group of second feature maps to obtain a third reconstructed image of the input image.

In a possible implementation, image quality of the second reconstructed image is better than image quality of the first reconstructed image, and image quality of the third reconstructed image is better than image quality of the second reconstructed image. The image quality is represented by any one of the following variables: a PSNR, an MS-SSIM, or an LPIPS.

In a possible implementation, the decoding unit is further configured to decode the bitstream to obtain channel quantity information. The channel quantity information indicates a channel quantity of at least one group of second feature maps obtained through decoding.

In a possible implementation, the reconstruction unit is further configured to perform AI decoding on the first group of second feature maps based on the channel quantity information to obtain the first reconstructed image.

In a possible implementation, the decoding unit is further configured to decode the bitstream to obtain first location information. The first location information indicates locations, of the at least one group of second feature maps obtained through decoding, in a first feature map of the input image.

In a possible implementation, the reconstruction unit is further configured to perform AI decoding on the first group of second feature maps based on the first location information to obtain the first reconstructed image.

In a possible implementation, the decoding unit is further configured to decode the bitstream to obtain second location information. The second location information indicates locations, of the at least one group of second feature maps obtained through decoding, in the bitstream.

In a possible implementation, the decoding unit is further configured to: determine, based on the second location information, bit data corresponding to the first group of second feature maps in the bitstream, and perform entropy decoding on the corresponding bit data to obtain the first group of second feature maps.

In a possible implementation, the decoding unit is further configured to decode the bitstream to obtain bitstream length information of the bitstream. The bitstream length information indicates a length of the bitstream.

In a possible implementation, the reconstruction unit is further configured to perform AI decoding on the first group of second feature maps based on the bitstream length information to obtain the first reconstructed image.

According to a fifth aspect, an embodiment of this application further provides an encoding apparatus. The apparatus includes at least one processor. When the at least one processor executes program code or instructions, the method according to any one of the first aspect or the possible implementations of the first aspect is implemented.

Optionally, the apparatus may further include at least one memory, and the at least one memory is configured to store the program code or the instructions.

According to a sixth aspect, an embodiment of this application further provides a decoding apparatus. The apparatus includes at least one processor. When the at least one processor executes program code or instructions, the method according to any one of the second aspect or the possible implementations of the second aspect is implemented.

According to a seventh aspect, an embodiment of this application further provides a bitstream storage method. The method includes: obtaining and storing a bitstream obtained by using the method according to any one of the first aspect or the possible implementations of the first aspect.

According to an eighth aspect, an embodiment of this application further provides a bitstream storage apparatus. The apparatus is configured to obtain and store a bitstream obtained by using the method according to any one of the first aspect or the possible implementations of the first aspect.

According to a ninth aspect, an embodiment of this application further provides a bitstream transmission method. The method includes: obtaining and transmitting a bitstream obtained by using the method according to any one of the first aspect or the possible implementations of the first aspect.

According to a tenth aspect, an embodiment of this application further provides a bitstream transmission apparatus. The apparatus is configured to obtain and transmit a bitstream obtained by using the method according to any one of the first aspect or the possible implementations of the first aspect.

According to an eleventh aspect, an embodiment of this application further provides a computer-readable storage medium. The computer-readable storage medium stores a bitstream obtained by using the method according to any one of the first aspect or the possible implementations of the first aspect.

According to a twelfth aspect, an embodiment of this application further provides a chip, including an input interface, an output interface, and at least one processor. Optionally, the chip further includes a memory. The at least one processor is configured to execute code in the memory. When the at least one processor executes the code, the chip implements the method according to any one of the first aspect or the possible implementations of the first aspect.

Optionally, the chip may be an integrated circuit.

According to a thirteenth aspect, an embodiment of this application further provides a computer-readable storage medium, configured to store a computer program. The computer program is used to implement the method according to any one of the first aspect or the possible implementations of the first aspect.

According to a fourteenth aspect, an embodiment of this application further provides a computer program product including instructions. When the computer program product runs on a computer, the computer is enabled to implement the method according to any one of the first aspect or the possible implementations of the first aspect.

The encoding apparatus, the decoding apparatus, the computer storage medium, the computer program product, and the chip provided in embodiments are all configured to perform the encoding method and the decoding method provided above. Therefore, for beneficial effect that can be achieved by the encoding apparatus, the decoding apparatus, the computer storage medium, the computer program product, and the chip, refer to beneficial effect of the encoding method and the decoding method provided above. Details are not described herein again.

### BRIEF DESCRIPTION OF DRAWINGS

To describe technical solutions in embodiments of this application more clearly, the following briefly describes accompanying drawings used in descriptions of embodiments. It is clear that the accompanying drawings in the following descriptions show merely some embodiments of this application, and a person of ordinary skill in the art may still derive other accompanying drawings from these accompanying drawings without creative efforts.
FIG. 1a is an example block diagram of a coding system according to an embodiment of this application;
FIG. 1b is an example block diagram of a video coding system according to an embodiment of this application;
FIG. 2 is an example block diagram of a video encoder according to an embodiment of this application;
FIG. 3 is an example block diagram of a video decoder according to an embodiment of this application;
FIG. 4 is an example block diagram of a video coding device according to an embodiment of this application;
FIG. 5 is an example block diagram of an apparatus according to an embodiment of this application;
FIG. 6 is a diagram of a neural network-based image compression method according to an embodiment of this application;
FIG. 7 is a diagram of an end-to-end image encoding framework according to an embodiment of this application;
FIG. 8 is a diagram of a structure of a neural network according to an embodiment of this application;
FIG. 9 is a diagram of a structure of a video communication system according to an embodiment of this application;
FIG. 10 is a schematic flowchart of an encoding method according to an embodiment of this application;
FIG. 11 is a diagram of an encoding and decoding process according to an embodiment of this application;
FIG. 12 is a diagram of another encoding and decoding process according to an embodiment of this application;
FIG. 13 is a diagram of still another encoding and decoding process according to an embodiment of this application;
FIG. 14 is a schematic flowchart of a decoding method according to an embodiment of this application;
FIG. 15 is a diagram of a structure of an encoding apparatus according to an embodiment of this application;
FIG. 16 is a diagram of a structure of a decoding apparatus according to an embodiment of this application;
FIG. 17 is a diagram of a structure of a chip according to an embodiment of this application;
FIG. 18 is a diagram of a structure of an electronic device according to an embodiment of this application;
FIG. 19 is a diagram of a structure of another electronic device according to an embodiment of this application;
FIG. 20 is a diagram of a structure of a neural network according to an embodiment of this application;
FIG. 21 is a diagram of a structure of a machine video encoding system according to an embodiment of this application; and
FIG. 22 is a diagram of a structure of a bitstream according to an embodiment of this application.

### DESCRIPTION OF EMBODIMENTS

The following clearly and completely describes technical solutions in embodiments of this application with reference to the accompanying drawings in embodiments of this application. It is clear that the described embodiments are merely some rather than all of embodiments of this application. All other embodiments obtained by a person of ordinary skill in the art based on embodiments in embodiments of this application without creative efforts shall fall within the protection scope of embodiments of this application.

The term "and/or" in this specification describes only an association relationship for describing associated objects and represents that three relationships may exist. For example, A and/or B may represent the following three cases: Only A exists, both A and B exist, and only B exists.

In this specification and the accompanying drawings of embodiments of this application, the terms "first", "second", and the like are intended to distinguish between different objects or distinguish between different processing of a same object, but are not intended to describe a particular order of the objects.

In addition, terms "includes", "have", and any other variants thereof mentioned in descriptions of embodiments of this application are intended to cover a non-exclusive inclusion. For example, a process, a method, a system, a product, or a device that includes a series of steps or units is not limited to the listed steps or units, but optionally further includes another unlisted step or unit, or optionally further includes another step or unit inherent to the process, method, product, or device.

It should be noted that, in descriptions of embodiments of this application, terms such as "example" or "for example" indicate giving an example, an illustration, or a description. Any embodiment or design solution described as "example" or "for example" in embodiments of this application should not be explained as being more preferred or having more advantages than another embodiment or design solution. Exactly, use of the word "example" or "for example" is intended to present a related concept in a specific manner.

First, the terms in embodiments of this application are explained.

Joint Photographic Experts Group (joint photographic experts group, JPEG) artificial intelligence (artificial intelligence, AI) is a learning-based image coding standard that provides a single-stream and compact compressed-domain representation and significantly improves compression efficiency in comparison with common image coding standards under same subjective quality. The JPEG AI is widely used in various fields. For example, the JPEG AI can be applied to cloud storage, visual surveillance, autonomous vehicles and devices, image capturing, storage, and management, and real-time monitoring and media distribution of visual data.

Information is to-be-encoded/decoded data, for example, an image, a video, an audio, or a plain text file.

A feature map is a feature extracted during neural network inference.

A symbol is basic unit that composes information, for example, a pixel in an image or each character in a plain text file.

Encoding is a process of converting information into a string of 0s and 1s.

A bitstream is a string of 0s and 1s obtained after information is encoded.

Decoding is a process of restoring information from a bitstream, which is an inverse process of encoding.

A prerequisite is data known during encoding and decoding. The prerequisite can be used during encoding and decoding to reduce a length of a bitstream.

Entropy encoding is using a probability modeling encoding method to make a length of a bitstream close to theoretical shortest (Shannon entropy). During entropy encoding, the length of the bitstream can be reduced based on a prerequisite.

Entropy decoding is a reverse process of entropy encoding by using a probability modeling decoding method. If a prerequisite is used during entropy encoding, the same prerequisite needs to be used during entropy decoding.

A throughput is a quantity of symbols that can be encoded/decoded per second during entropy encoding/entropy decoding.

A register is a memory used by a processor to temporarily store instructions, data, and the like, and has a small capacity, and a very fast read/write speed. A current compute device usually has 8 to 32 16-bit, 32-bit, or 64-bit registers.

A memory is a main storage unit in a compute device. A capacity is much greater than that of a register, but a read/write speed of the register is generally more than 10 times that of the memory.

A feature map (feature map) is three-dimensional data output by a convolutional layer, an activation layer, a pooling layer, and a batch normalization layer in a convolutional neural network. Three dimensions are referred to as: a width (width), a height (height), and a channel (channel).

Data coding includes two parts: data encoding and data decoding. Data encoding is performed at a source side (or usually referred to as an encoder side), and usually includes processing (for example, compressing) raw data to reduce an amount of data required for representing the raw data (for more efficient storage and/or transmission). Data decoding is performed at a destination side (or usually referred to as a decoder side), and usually includes inverse processing relative to the encoder side to reconstruct the raw data. "Coding" of data in embodiments of this application should be understood as "encoding" or "decoding" of the data. A combination of an encoding part and a decoding part is also referred to as coding (encoding and decoding, CODEC).

In a case of lossless data coding, the raw data can be reconstructed. In other words, reconstructed raw data has same quality as the raw data (it is assumed that no transmission loss or another data loss occurs during storage or transmission). In a case of lossy data coding, further compression is performed through, for example, quantization, to reduce an amount of data required for representing the raw data, and the raw data cannot be fully reconstructed at the decoder side. In other words, quality of reconstructed raw data is lower or worse than quality of the raw data.

Embodiments of this application may be applied to video data, other data having a compression/decompression requirement, and the like. The following describes embodiments of this application by using coding of the video data (which is briefly referred to as video coding) as an example. For other types of data (for example, image data, audio data, integer data, and other data having a compression/decompression requirement), refer to the following descriptions. Details are not described in embodiments of this application. It should be noted that, in comparison with video coding, in a process of coding data such as the audio data and the integer data, the data does not need to be partitioned into blocks, but the data may be directly coded.

Video coding usually refers to processing of a sequence of images, where the sequence of images forms a video or a video sequence. In the field of video coding, the terms "image (image)", "frame (frame)", and "image (image)" may be used as synonyms.

Several video coding standards are used for "lossy hybrid video encoding and decoding" (that is, spatial and temporal prediction in a pixel domain is combined with 2D transform coding for applying quantization in a transform domain). Each image of a video sequence is usually partitioned into a set of non-overlapping blocks, and coding is usually performed at a block level. To be specific, at the encoder side, a video is usually processed, that is, encoded, at the block (video block) level. For example, a prediction block is generated through spatial (intra-image) prediction and temporal (inter-image) prediction, the prediction block is subtracted from a current block (block being processed or to be processed) to obtain a residual block, and the residual block is transformed in the transform domain and quantized to reduce an amount of data that is to be transmitted (compressed). At the decoder side, an inverse processing part relative to the encoder is applied to an encoded block or a compressed block to reconstruct the current block for representation. In addition, the encoder needs to repeat processing steps of the decoder, to enable the encoder and the decoder to generate identical predictions (for example, intra- and inter predictions) and/or re-construct a pixel, for processing, that is, coding, a subsequent block.

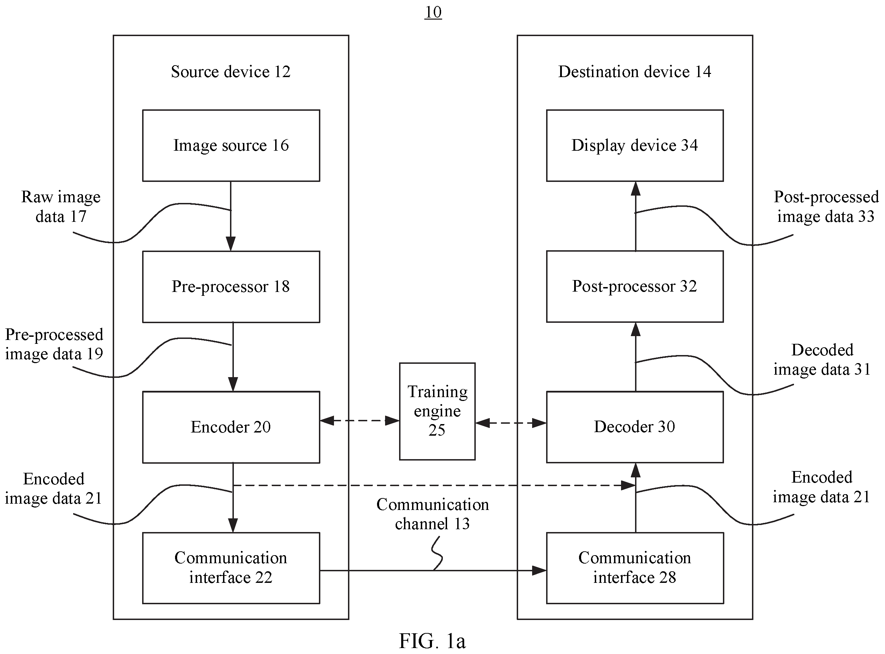

In the following embodiments of a coding system 10, an encoder 20 and a decoder 30 are described based on FIG. 1a to FIG. 3.

FIG. 1a is an example block diagram of the coding system 10 according to an embodiment of this application, for example, a video coding system 10 (also referred to as the coding system 10 for short) that may use technologies in embodiments of this application. A video encoder 20 (also referred to as an encoder 20 for short) and a video decoder 30 (also referred to as a decoder 30 for short) of the video coding system 10 represent devices that may be configured to perform technologies based on various examples described in embodiments of this application.

As shown in FIG. 1a, the coding system 10 includes a source device 12. The source device 12 is configured to provide encoded image data 21 such as an encoded image for a destination device 14 for decoding the encoded image data 21.

The source device 12 includes an encoder 20, and may additionally or optionally include an image source 16, a pre-processor (or pre-processing unit) 18 such as an image pre-processor, and a communication interface (or communication unit) 22.

The image source 16 may include or be any type of image capturing device for capturing a real-world image and the like, and/or any type of image generating device such as a computer-graphics processing unit for generating a computer animated image, or any type of device for obtaining and/or providing a real-world image, a computer generated image (for example, screen content, a virtual reality (virtual reality, VR) image) and/or any combination thereof (for example, an augmented reality (augmented reality, AR) image). The image source may be any type of memory or storage storing any of the foregoing images.

To distinguish between processing performed by the pre-processor (or pre-processing unit) 18, an image (or image data) 17 may also be referred to as a raw image (or raw image data) 17.

The pre-processor 18 is configured to: receive the raw image data 17, and perform pre-processing on the raw image data 17 to obtain a pre-processed image (or pre-processed image data) 19. For example, pre-processing performed by the pre-processor 18 may include trimming, color format conversion (for example, conversion from RGB to YCbCr), color correction, or de-noising. It may be understood that the pre-processing unit 18 may be an optional component.

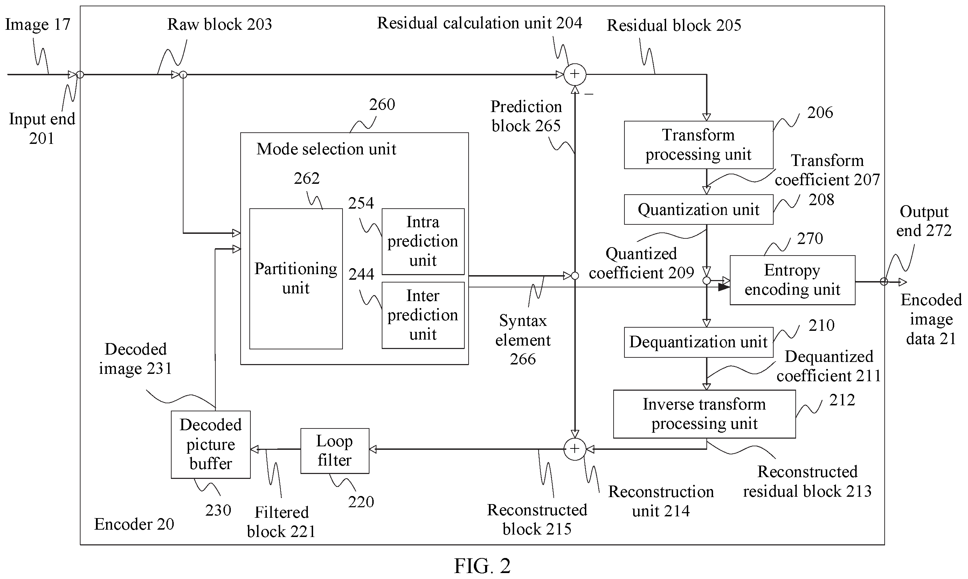

The video encoder (or encoder) 20 is configured to: receive the pre-processed image data 19, and provide the encoded image data 21 (further details are described below based on FIG. 2 and the like).

A communication interface 22 of the source device 12 may be configured to: receive the encoded image data 21, and send the encoded image data 21 (or any further processed version thereof) through a communication channel 13 to another device such as the destination device 14 or any other device for storage or direct reconstruction.

The destination device 14 includes the decoder 30, and may additionally or optionally include a communication interface (or communication unit) 28, a post-processor (or post-processing unit) 32, and a display device 34.

The communication interface 28 of the destination device 14 is configured to: receive the encoded image data 21 (or any further processed version thereof) directly from the source device 12 or from any other source device, for example, a storage device such as an encoded image data storage device, and provide the encoded image data 21 for the decoder 30.

The communication interface 22 and the communication interface 28 may be configured to send or receive the encoded image data (or encoded data) 21 through a direct communication link between the source device 12 and the destination device 14, for example, a direct wired or wireless connection, or through any type of network such as a wired or wireless network or any combination thereof, or any type of private or public network, or any type of combination thereof.

For example, the communication interface 22 may be configured to: package the encoded image data 21 into an appropriate format such as a packet, and/or process the encoded image data using any type of transmission encoding or processing for transmission over a communication link or communication network.

The communication interface 28 that corresponds to the communication interface 22 may be, for example, configured to: receive the transmitted data, and process the transmitted data using any type of corresponding transmission decoding or processing and/or de-packaging to obtain the encoded image data 21.

Both the communication interface 22 and the communication interface 28 may be configured as unidirectional communication interfaces as indicated by an arrow, corresponding to the communication channel 13, pointing from the source device 12 to the destination device 14 in FIG. 1a, or bidirectional communication interfaces, and may be configured to send and receive messages, and the like, to set up a connection, and acknowledge and exchange any other information related to the communication link and/or data transmission, for example, encoded image data transmission.

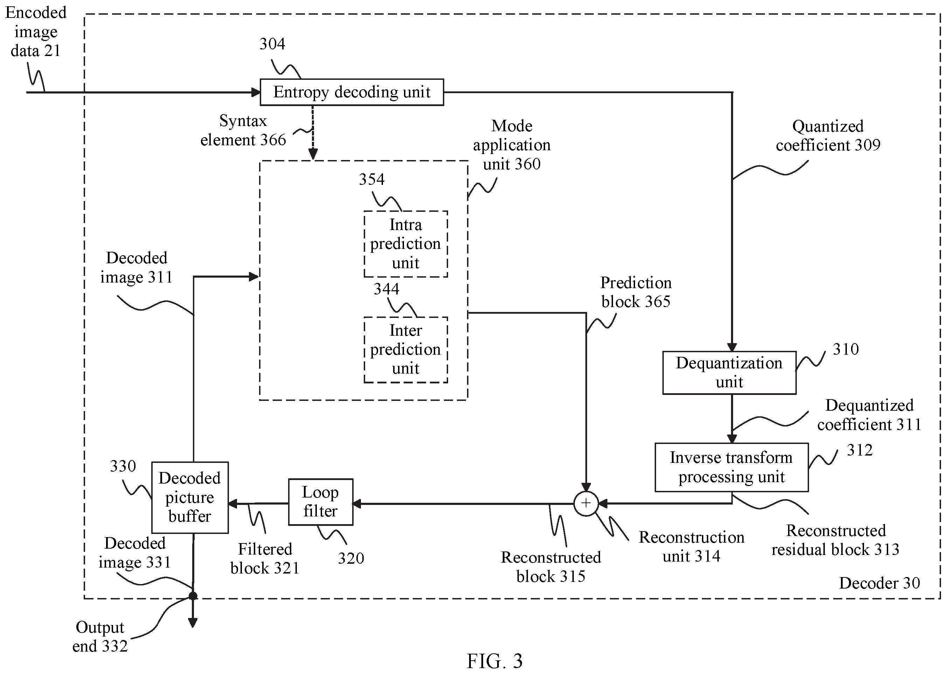

The video decoder (or decoder) 30 is configured to: receive the encoded image data 21, and provide decoded image data (decoded image data) 31 (further details are described below based on FIG. 3 and the like).

The post-processor 32 is configured to post-process the decoded image data 31 (also referred to as reconstructed image data) such as a decoded image, to obtain post-processed image data 33 such as a post-processed image. Post-processing performed by the post-processing unit 32 may include, for example, color format conversion (for example, conversion from YCbCr to RGB), color correction, trimming, resampling, or any other processing for generating the decoded image data 31 for display by, for example, the display device 34.

The display device 34 is configured to receive the post-processed image data 33 for displaying the image, for example, to a user or viewer. The display device 34 may be or include any type of display for representing the reconstructed image, for example, an integrated or external display screen or display. For example, the display screen may include a liquid crystal display (liquid crystal display, LCD), an organic light-emitting diode (organic light-emitting diode, OLED) display, a plasma display, a projector, a micro LED display, a liquid crystal on silicon (liquid crystal on silicon, LCoS) display, a digital light processor (digital light processor, DLP), or any type of another display screen.

The coding system 10 further includes a training engine 25. The training engine 25 is configured to train the encoder 20 (especially an entropy encoding unit 270 in the encoder 20) or the decoder 30 (especially an entropy decoding unit 304 in the decoder 30), to perform entropy encoding on a to-be-encoded image block based on an estimated probability distribution obtained through estimation. For detailed descriptions of the training engine 25, refer to the following method embodiments.

Although FIG. 1a shows the source device 12 and the destination device 14 as separate devices, a device embodiment may alternatively include both the source device 12 and the destination device 14 or functions of both the source device 12 and the destination device 14, that is, the source device 12 or a corresponding function and the destination device 14 or a corresponding function. In such embodiments, the source device 12 or corresponding function and the destination device 14 or corresponding function may be implemented using same hardware and/or software or by separate hardware and/or software or any combination thereof.

Based on the description, it is obvious for a skilled person that existence and (exact) division into different units or functions in the source device 12 and/or the destination device 14 as shown in FIG. 1a may vary based on an actual device and application.

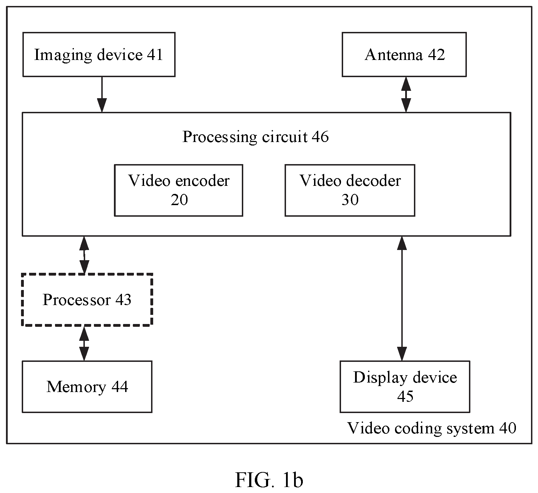

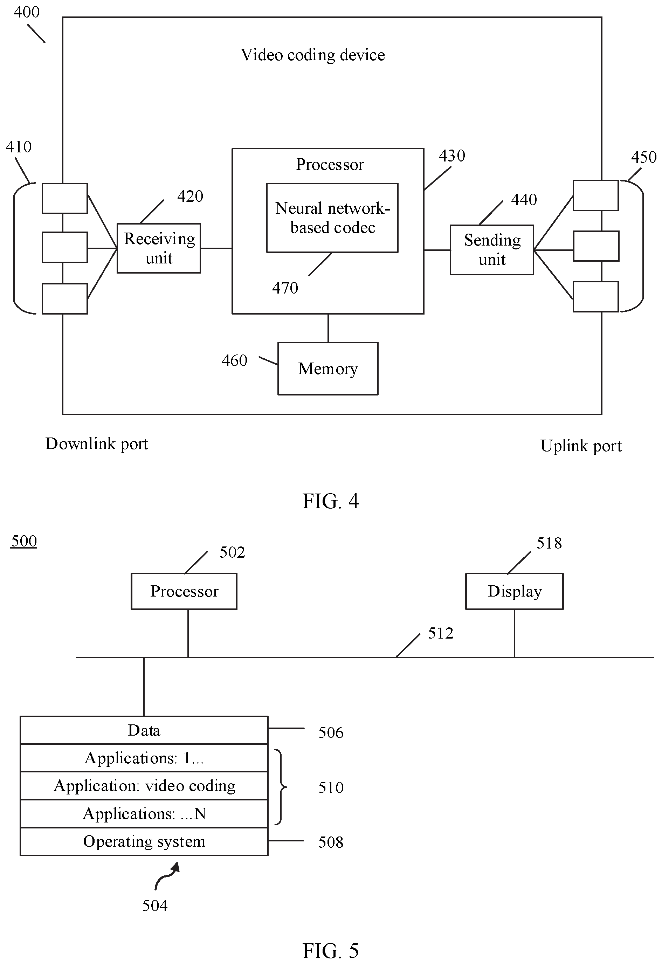

FIG. 1b is an example block diagram of a video coding system 40 according to an embodiment of this application. The encoder 20 (for example, the video encoder 20) or the decoder 30 (for example, the video decoder 30) or both the encoder 20 and the decoder 30 may be implemented via a processing circuit of the video coding system 40 shown in FIG. 1b, for example, one or more microprocessors, a digital signal processor (digital signal processor, DSP), an application-specific integrated circuit (application-specific integrated circuit, ASIC), a field programmable gate array (field programmable gate array, FPGA), discrete logic, hardware, a video coding dedicated processor, or any combination thereof. Refer to FIG. 2 and FIG. 3. FIG. 2 is an example block diagram of a video encoder according to an embodiment of this application, and FIG. 3 is an example block diagram of a video decoder according to an embodiment of this application. The encoder 20 may be implemented via a processing circuit 46, to include various modules described based on the encoder 20 in FIG. 2 and/or any other encoder system or subsystem described in this specification. The decoder 30 may be implemented via the processing circuit 46, to include various modules described based on the decoder 30 in FIG. 3 and/or any other decoder system or subsystem described in this specification. The processing circuit 46 may be configured to perform the various operations as discussed below. As shown in FIG. 4, if the technologies are implemented partially in software, a device may store instructions for the software in a suitable non-transitory computer-readable storage medium, and may execute the instructions in hardware using one or more processors to perform the technologies in embodiments of this application. Either of the video encoder 20 and the video decoder 30 may be integrated as a part of a combined encoder/decoder (encoder/decoder, CODEC) in a single device, for example, as shown in FIG. 1b.

The source device 12 and the destination device 14 may include any one of various devices, including any type of handheld or stationary devices, for example, notebook or laptop computers, mobile phones, smart phones, tablets or tablet computers, cameras, desktop computers, set-top boxes, televisions, display devices, digital media players, video gaming consoles, video streaming devices (such as content service servers or content delivery servers), broadcast receiver devices, broadcast transmitter devices, monitor devices, or the like, and may use no or any type of operating system. The source device 12 and the destination device 14 may also be devices in a cloud computing scenario, for example, virtual machines in the cloud computing scenario. In some cases, components for wireless communication may be equipped on the source device 12 and the destination device 14. Therefore, the source device 12 and the destination device 14 may be wireless communication devices.

A virtual scenario application (application, APP), such as a virtual reality (virtual reality, VR) application, an augmented reality (augmented reality, AR) application, or a mixed reality (mixed reality, MR) application may be installed on each of the source device 12 and the destination device 14, and the VR application, the AR application, or the MR application may be run based on a user operation (for example, tapping, touching, sliding, shaking, or voice control). The source device 12 and the destination device 14 may capture images/videos of any object in an environment via a camera and/or a sensor, and display a virtual object on a display device based on the captured images/videos. The virtual object may be a virtual object (namely, an object in a virtual environment) in a VR scenario, an AR scenario, or an MR scenario.

It should be noted that, in embodiments of this application, the virtual scenario applications in the source device 12 and the destination device 14 may be built-in applications of the source device 12 and the destination device 14, or may be applications that are provided by a third-party service provider and that are installed by a user. This is not specifically limited herein.

In addition, real-time video transmission applications such as live broadcast applications may be installed on the source device 12 and the destination device 14. The source device 12 and the destination device 14 may capture the images/videos via the camera, and display the captured images/videos on the display device.

In some cases, the video coding system 10 shown in FIG. 1a is merely an example and the technologies provided in embodiments of this application are applicable to video coding settings (for example, video encoding or video decoding). These settings do not necessarily include any data communication between an encoding device and a decoding device. In other examples, data is retrieved from a local memory, sent through a network, or the like. A video encoding device may encode data and store the data into the memory, and/or a video decoding device may retrieve data from the memory and decode the data. In some examples, encoding and decoding are performed by devices that do not communicate with each other, but simply encode data into the memory and/or retrieve data from the memory and decode the data.

FIG. 1b is the example block diagram of the video coding system 40 according to the embodiment of this application. As shown in FIG. 1b, the video coding system 40 may include an imaging device 41, the video encoder 20, and the video decoder 30 (and/or a video encoder/decoder implemented via the processing circuit 46), an antenna 42, one or more processors 43, one or more memories 44, and/or a display device 45.

As shown in FIG. 1b, the imaging device 41, the antenna 42, the processing circuit 46, the video encoder 20, the video decoder 30, the processor 43, the memory 44, and/or the display device 45 can communicate with each other. The video coding system 40 may include only the video encoder 20 or only the video decoder 30 in different examples.

In some examples, the antenna 42 may be configured to transmit or receive an encoded bitstream of video data. In addition, in some examples, the display device 45 may be configured to present the video data. The processing circuit 46 may include application-specific integrated circuit (application-specific integrated circuit, ASIC) logic, a graphics processing unit, a general-purpose processor, and the like. The video coding system 40 may also include the optional processor 43. The optional processor 43 may similarly include application-specific integrated circuit (application-specific integrated circuit, ASIC) logic, a graphics processing unit, a general-purpose processor, and the like. In addition, the memory 44 may be a memory of any type, for example, a volatile memory (for example, a static random access memory (static random access memory, SRAM) or a dynamic random access memory (dynamic random access memory, DRAM)) or a non-volatile memory (for example, a flash memory). In a non-limitative example, the memory 44 may be implemented by a cache memory. In other examples, the processing circuit 46 may include a memory (for example, a cache) to implement a picture buffer and the like.

In some examples, the video encoder 20 implemented via a logic circuit may include the picture buffer (which is implemented via, for example, the processing circuit 46 or the memory 44) and the graphics processing unit (which is implemented via, for example, the processing circuit 46). The graphics processing unit may be communicatively coupled to the picture buffer. The graphics processing unit may be included in the video encoder 20 implemented via the processing circuit 46, to implement various modules described with reference to FIG. 2 and/or any other encoder system or subsystem described in this specification. The logic circuit may be configured to perform various operations described in this specification.

In some examples, the video decoder 30 may be implemented via the processing circuit 46 in a similar manner, to implement various modules described based on the video decoder 30 in FIG. 3 and/or any other decoder system or subsystem described in this specification. In some examples, the video decoder 30 implemented via a logic circuit may include a picture buffer (which is implemented via the processing circuit 46 or the memory 44) and the graphics processing unit (which is implemented via, for example, the processing circuit 46). The graphics processing unit may be communicatively coupled to the picture buffer. The graphics processing unit may be included in the video decoder 30 implemented via the processing circuit 46, to implement various modules described with reference to FIG. 3 and/or any other decoder system or subsystem described in this specification.

In some examples, the antenna 42 may be configured to receive an encoded bitstream of video data. As described, the encoded bitstream may include data, an indicator, an index value, mode selection data, and the like related to video frame encoding described in this specification, for example, data related to coding partitioning (for example, a transform coefficient or a quantized transform coefficient, an optional indicator (as described), and/or data defining coding partitioning). The video coding system 40 may further include the video decoder 30 that is coupled to the antenna 42 and that is configured to decode the encoded bitstream. The display device 45 is configured to present a video frame.

It should be understood that in this embodiment of this application, for the example described based on the video encoder 20, the video decoder 30 may be configured to perform a reverse process. For a signaling syntax element, the video decoder 30 may be configured to: receive and parse the syntax element, and correspondingly decode related video data. In some examples, the video encoder 20 may entropy encode the syntax element into an encoded video bitstream. In these examples, the video decoder 30 may parse the syntax element and decode the related video data accordingly.

For ease of description, embodiments of this application are described based on versatile video coding (versatile video coding, VVC) reference software or high efficiency video coding (high efficiency video coding, HEVC) developed by the joint collaboration team on video coding (joint collaboration team on video coding, JCT-VC) constituted by the ITU-T video coding experts group (video coding experts group, VCEG) and the ISO/IEC moving image experts group (moving image experts group, MPEG). A person of ordinary skill in the art understands that embodiments of this application are not limited to the HEVC or the VVC.

### Encoder and encoding method

As shown in FIG. 2, the video encoder 20 includes an input end (or input interface) 201, a residual calculation unit 204, a transform processing unit 206, a quantization unit 208, a dequantization unit 210, an inverse transform processing unit 212, a reconstruction unit 214, a loop filter 220, a decoded picture buffer (decoded picture buffer, DPB) 230, a mode selection unit 260, an entropy encoding unit 270, and an output end (or output interface) 272. The mode selection unit 260 may include an inter prediction unit 244, an intra prediction unit 254 and a partitioning unit 262. The inter prediction unit 244 may include a motion estimation unit and a motion compensation unit (not shown). The video encoder 20 shown in FIG. 2 may also be referred to as a hybrid video encoder or a video encoder based on a hybrid video codec.

### Images and image partitioning (images and blocks)

The encoder 20 may be configured to receive, for example, via the input end 201, the image 17 (or image data), for example, an image in a sequence of images forming a video or video sequence. The received image or image data may also be the pre-processed image (or pre-processed image data) 19. For ease of simplicity, the image 17 is used in the following description. The image 17 may also be referred to as a current image or a to-be-encoded image (in particular in video coding to distinguish the current image from other images, for example, previously encoded and/or decoded images of a same video sequence, namely, a video sequence that also includes the current image).

A (digital) image is or may be considered as a two-dimensional array or matrix including samples with intensity values. A sample in the array may also be referred to as a pixel (pixel or pel) (a short form of an image element). A quantity of samples in horizontal and vertical directions (or axes) of an array or image defines a size and/or resolution of the image. For representation of color, three color components are usually used. To be specific, the image may be represented as or include three sample arrays. In an RBG format or color space, an image includes corresponding red, green and blue sample arrays. However, in video coding, each pixel is usually represented in a luminance/chrominance format or color space, for example, YCbCr, which includes a luminance component indicated by Y (sometimes indicated by L) and two chrominance components indicated by Cb and Cr. The luminance (luma) component Y represents brightness or gray level intensity (for example, the brightness and the gray level intensity are the same in a gray-scale image), and the two chrominance (chrominance, chroma for short) components Cb and Cr represent chromaticity or color information components. Correspondingly, an image in a YCbCr format includes a luminance sample array of luminance sample values (Y), and two chrominance sample arrays of chrominance values (Cb and Cr). An image in an RGB format may be converted or transformed into the YCbCr format and vice versa, the process is also referred to as color transformation or conversion. If an image is monochrome, the image may include only a luminance sample array. Correspondingly, an image may be, for example, a luminance sample array in a monochrome format or luminance sample arrays in 4:2:0, 4:2:2, and 4:4:4 color formats and two corresponding chrominance sample arrays.

Embodiments of the video encoder 20 may include an image partitioning unit (not shown in FIG. 2) configured to partition the image 17 into a plurality of (usually non-overlapping) image blocks 203. These blocks may also be referred to as root blocks, macro blocks (H.264/AVC) or coding tree blocks (coding tree block, CTB) or coding tree units (coding tree unit, CTU) in the H.265/HEVC and VVC standards. The image partitioning unit may be configured to: use a same block size for all images of a video sequence and a corresponding grid defining the block size, or to change a block size between images or subsets or groups of images, and partition each image into corresponding blocks.

In another embodiment, the video encoder may be configured to directly receive the block 203 of the image 17, for example, one, several, or all the blocks forming the image 17. The image block 203 may also be referred to as a current image block or a to-be-encoded image block.

Like the image 17, the image block 203 is also or may be considered as a two-dimensional array or matrix including samples with intensity values (sample values), although of a smaller size than the image 17. In other words, the block 203 may include one sample array (for example, a luminance array in a case of a monochrome image 17, or a luminance or chrominance array in a case of a color image), or three sample arrays (for example, one luminance array and two chrominance arrays in a case of a color image 17), or any other quantity and/or type of arrays based on a used color format. Quantities of samples of the block 203 in the horizontal and vertical directions (or axes) define a size of the block 203. Correspondingly, a block may be an array of M×N (M columns×N rows) samples, an array of M×N transform coefficients, or the like.

In an embodiment, the video encoder 20 shown in FIG. 2 may be configured to encode the image 17 block by block, for example, perform encoding and prediction on each block 203.

In an embodiment, the video encoder 20 shown in FIG. 2 may be further configured to partition and/or encode the image by using slices (also referred to as video slices). The image may be partitioned or encoded by using one or more (usually non-overlapping) slices. Each slice may include one or more blocks (for example, coding tree units CTU) or one or more groups of blocks (for example, tiles (tiles) in the H.265/HEVC/VVC standard and bricks (bricks) in the VVC standard).

In an embodiment, the video encoder 20 shown in FIG. 2 may be further configured to partition and/or encode the image by using slices/tile groups (also referred to as video tile groups) and/or tiles (also referred to as video tiles). The image may be partitioned or encoded by using one or more (usually non-overlapping) slices/tile groups, and each slice/tile group may include one or more blocks (for example, CTUs), one or more tiles, or the like. Each tile may be of a rectangular shape or the like, and may include one or more complete or partial blocks (for example, CTUs).

### Residual calculation

The residual calculation unit 204 is configured to calculate a residual block 205 based on the image block (or raw block) 203 and a prediction block 265 (where the prediction block 265 is described in detail below), for example, obtain the residual block 205 in the pixel domain by subtracting a sample value of the prediction block 265 from a sample value of the image block 203 sample by sample (pixel by pixel).

### Quantization

The quantization unit 208 may be configured to quantize, through, for example, scalar quantization or vector quantization, a transform coefficient 207 to obtain a quantized transform coefficient 209. The quantized transform coefficient 209 may also be referred to as a quantized residual coefficient 209.

A quantization process may reduce a bit depth related to a part or all of transform coefficients 207. For example, an n-bit transform coefficient may be rounded down to an m-bit transform coefficient during quantization, where n is greater than m. A quantization degree may be modified by adjusting a quantization parameter (quantization parameter, QP). For example, for scalar quantization, different scales may be applied to achieve finer or coarser quantization. A smaller quantization step size corresponds to finer quantization, and a larger quantization step size corresponds to coarser quantization. An appropriate quantization step size may be indicated by the quantization parameter (quantization parameter, QP). For example, the quantization parameter may be an index of a predefined set of appropriate quantization step sizes. For example, a smaller quantization parameter may correspond to finer quantization (a smaller quantization step size) and a larger quantization parameter may correspond to coarser quantization (a larger quantization step size), or vice versa. Quantization may include division by a quantization step size, and corresponding or inverse dequantization performed by the dequantization unit 210 and the like may include multiplication by the quantization step size. Embodiments according to some standards such as HEVC may be used to use the quantization parameter to determine the quantization step size. Generally, the quantization step size may be calculated based on a quantization parameter through fixed point approximation of an equation including division. Additional scaling factors may be introduced for quantization and dequantization to restore a norm of a residual block, where the norm of the residual block may be modified due to scales used in the fixed point approximation of an equation for the quantization step size and the quantization parameter. In an example implementation, scales of the inverse transform and dequantization may be combined. Alternatively, customized quantization tables may be used and indicated from an encoder to a decoder in a bitstream and the like. The quantization is a lossy operation, where a larger quantization step size indicates a larger loss.

In an embodiment, the video encoder 20 (correspondingly, the quantization unit 208) may be configured to output the quantization parameter (quantization parameter, QP). For example, the quantization parameter is directly output, or is output after the entropy encoding unit 270 encodes or compresses the quantization parameter, so that, for example, the video decoder 30 may receive and use the quantization parameter for decoding.

### Dequantization

The dequantization unit 210 is configured to perform dequantization of the quantization unit 208 on a quantized coefficient to obtain a dequantized coefficient 211, for example, perform, based on or by using a same quantization step size as the quantization unit 208, a dequantization scheme of a quantization scheme performed by the quantization unit 208. The dequantized coefficient 211 may also be referred to as a dequantized residual coefficient 211, which corresponds to the transform coefficient 207. However, due to the quantization causes a loss, the dequantized coefficient 211 is usually not exactly the same as the transform coefficient.

### Reconstruction

The reconstruction unit 214 (for example, a summer 214) is configured to add a transform block 213 (that is, a reconstructed residual block 213) to the prediction block 265 to obtain a reconstructed block 215 in a sample domain, for example, add a sample value of the reconstructed residual block 213 and the sample value of the prediction block 265.

### Partitioning

The partitioning unit 262 may partition (or split) the image block (or CTU) 203 into smaller parts, for example, square or rectangular small blocks. For an image that has three sample arrays, a CTU includes N×N luminance sample blocks and two corresponding chrominance sample blocks. A maximum allowed size of a luminance block in the CTU is specified to be 128×128 in the developing versatile video coding (versatile video coding, VVC) standard, but may be specified to be a value other than 128×128 in the future, for example, 256×256. CTUs of an image may be clustered/grouped as slices/tile groups, or tiles or bricks. A tile covers a rectangular region of an image, and a tile may be divided into one or more bricks. A brick includes a plurality of CTU rows in a tile. A tile that is not partitioned into a plurality of bricks may be referred to as a brick. However, a brick is a true subset of a tile, and therefore is not referred to as a tile. There are two modes of tile groups supported in VVC: a raster-scan slice/tile group mode and a rectangular slice mode. In the raster-scan tile group mode, a slice/tile group includes a sequence of tiles in tile raster scan of an image. In the rectangular slice mode, a slice includes a plurality of bricks of an image that together form a rectangular region of the image. The bricks within a rectangular slice are in an order of brick raster scan of the slice. These smaller blocks (which may also be referred to as sub-blocks) may be further partitioned into even smaller parts. This is also referred to as tree partitioning or hierarchical tree partitioning. A root block, for example, at a root tree level 0 (a hierarchy level 0, and a depth 0) may be recursively partitioned into two or more blocks at a next lower tree level, for example, nodes at a tree level 1 (a hierarchy level 1, and a depth 1). These blocks may be again partitioned into two or more blocks at a next lower level, for example, a tree level 2 (a hierarchy level 2, and a depth 2), until partitioning ends (because an end criterion is met, for example, a maximum tree depth or minimum block size is reached). Blocks that are not further partitioned are also referred to as leaf blocks or leaf nodes of a tree. A tree partitioned into two parts is referred to as a binary-tree (binary-tree, BT), a tree partitioned into three parts is referred to as a ternary-tree (ternary-tree, TT), and a tree partitioned into four parts is referred to as a quad-tree (quad-tree, QT).

### Entropy encoding

The entropy encoding unit 270 is configured to apply an entropy coding algorithm or scheme (for example, a variable length coding (variable length coding, VLC) scheme, a context-adaptive VLC (context-adaptive VLC, CALVC) scheme, an arithmetic coding scheme, a binarization algorithm, context-adaptive binary arithmetic coding (context-adaptive binary arithmetic coding, CABAC), syntax-based context-adaptive binary arithmetic coding (syntax-based context-adaptive binary arithmetic coding, SBAC), probability interval partitioning entropy (probability interval partitioning entropy, PIPE) coding, or another entropy coding method or technology) on the quantized residual coefficient 209, an inter prediction parameter, an intra prediction parameter, a loop filter parameter, and/or another syntax element, to obtain the encoded image data 21 that can be output via the output end 272 in a form of an encoded bitstream 21 and the like. In this way, the video decoder 30 and the like can receive and use the parameters for decoding. The encoded bitstream 21 may be transmitted to the video decoder 30, or stored in the memory for later transmission or retrieval by the video decoder 30.

Another structural variation of the video encoder 20 may be configured to encode a video stream. For example, a non-transform based encoder 20 can quantize a residual signal directly without the transform processing unit 206 for some blocks or frames. In another implementation, the encoder 20 can have the quantization unit 208 and the dequantization unit 210 that are combined into a single unit.

### Decoder and decoding method

As shown in FIG. 3, the video decoder 30 is configured to receive the encoded image data 21 (for example, the encoded bitstream 21), for example, encoded by the encoder 20, to obtain a decoded image 331. The encoded image data or bitstream includes information for decoding the encoded image data, for example, data that represents image blocks of an encoded video slice (and/or a tile group or a tile) and related syntax elements.

In the example of FIG. 3, the decoder 30 includes the entropy decoding unit 304, a dequantization unit 310, an inverse transform processing unit 312, a reconstruction unit 314 (for example, a summer 314), a loop filter 320, a decoded picture buffer (DBP) 330, a mode application unit 360, an inter prediction unit 344, and an intra prediction unit 354. The inter prediction unit 344 may be or include a motion compensation unit. In some examples, the video decoder 30 may perform a decoding process generally reciprocal to the encoding process described with reference to the video encoder 100 in FIG. 2.

As described in the encoder 20, the dequantization unit 210, the inverse transform processing unit 212, the reconstruction unit 214, the loop filter 220, the decoded picture buffer DPB 230, the inter prediction unit 344, and the intra prediction unit 354 further form a "built-in decoder" of the video encoder 20. Correspondingly, the dequantization unit 310 may be identical in function to the dequantization unit 110, the inverse transform processing unit 312 may be identical in function to the inverse transform processing unit 122, the reconstruction unit 314 may be identical in function to the reconstruction unit 214, the loop filter 320 may be identical in function to the loop filter 220, and the decoded picture buffer 330 may be identical in function to the decoded picture buffer 230. Therefore, the explanations provided for the corresponding units and functions of the video encoder 20 apply correspondingly to the corresponding units and functions of the video decoder 30.

### Entropy decoding

The entropy decoding unit 304 is configured to: parse the bitstream 21 (or usually the encoded image data 21), and perform entropy decoding on the encoded image data 21 to obtain, a quantized coefficient 309, a decoded coding parameter (not shown in FIG. 3), and/or the like, for example, any one or all of an inter prediction parameter (for example, a reference image index and a motion vector), an intra prediction parameter (for example, an intra prediction mode or an index), a transform parameter, a quantization parameter, a loop filter parameter, and/or another syntax element. The entropy decoding unit 304 may be configured to apply a decoding algorithm or scheme corresponding to an encoding scheme of the entropy encoding unit 270 of the encoder 20. The entropy decoding unit 304 may be further configured to: provide the inter prediction parameter, the intra prediction parameter, and/or the another syntax element for the mode application unit 360, and provide another parameter for another unit of the decoder 30. The video decoder 30 may receive syntax elements at a video slice level and/or a video block level. In addition or as an alternative to a slice and a corresponding syntax element, a tile group and/or a tile and a corresponding syntax element may be received or used.

### Dequantization

The dequantization unit 310 may be configured to: receive a quantization parameter (quantization parameter, QP) (or generally, information related to dequantization) and a quantized coefficient from the encoded image data 21 (for example, parsed and/or decoded by the entropy decoding unit 304), and dequantize the decoded quantized coefficient 309 based on the quantization parameter, to obtain a dequantized coefficient 311. The dequantized coefficient 311 may also be referred to as a transform coefficient 311. The dequantization process may include use of a quantization parameter calculated by the video encoder 20 for each video block in a video slice to determine a degree of quantization and a degree of dequantization that needs to be performed.

### Reconstruction

The reconstruction unit 314 (for example, the summer 314) is configured to add a reconstructed residual block 313 to a prediction block 365 to obtain a reconstructed block 315 in the sample domain, for example, add a sample value of the reconstructed residual block 313 and a sample value of the prediction block 365.

Another variation of the video decoder 30 may be configured to decode the encoded image data 21. For example, the decoder 30 can generate an output video stream without the loop filtering unit 320. For example, a non-transform based decoder 30 can dequantize a residual signal directly without the inverse transform processing unit 312 for some blocks or frames. In another implementation, the video decoder 30 can have the dequantization unit 310 and the inverse transform processing unit 312 that are combined into a single unit.

It should be understood that, in the encoder 20 and the decoder 30, a processing result of a current step may be further processed and then output to a next step. For example, after interpolation filtering, motion vector derivation, or loop filtering, a further operation such as a clip (clip) or shift (shift) operation may be performed on the processing result of interpolation filtering, motion vector derivation, or loop filtering.

It should be noted that a further operation may be performed on derived motion vectors (including but not limit to control point motion vectors in an affine mode, sub-block motion vectors in affine, planar, and ATMVP modes, temporal motion vectors, and the like) of a current block. For example, a value of a motion vector is limited to a predefined range based on a representing bit of the motion vector. If the representing bit of the motion vector is bitDepth, the range is from -2^(bitDepth-1) to 2^(bitDepth-1)-1, where "^" means exponentiation. For example, if bitDepth is set to 16, the range is from -32768 to 32767; and if bitDepth is set to 18, the range is from -131072 to 131071. For example, a value of derived motion vectors (for example, MVs of four 4×4 sub-blocks within one 8×8 block) is limited, and therefore a maximum difference between integer parts of the MVs of the four 4×4 sub-blocks is no more than N pixels, for example, no more than 1 pixel. Two methods for limiting the motion vector based on bitDepth are provided herein.

Although video encoding and decoding is mainly described in the foregoing embodiments, it should be noted that embodiments of the coding system 10, the encoder 20, and the decoder 30, and other embodiments described in this specification may also be used for still image processing or encoding and decoding, that is, processing or encoding and decoding of a single image independent of any preceding or consecutive images in video encoding and decoding. Generally, the inter prediction unit 244 (encoder) and the inter prediction unit 344 (decoder) may not be available if image processing is limited to only the single image 17. All other functions (also referred to as tools or technologies) of the video encoder 20 and the video decoder 30 may also be used for still image processing, for example, residual calculation 204/304, transform 206, quantization 208, dequantization 210/310, (inverse) transform 212/312, partitioning 262/362, intra prediction 254/354 and/or loop filtering 220/320, entropy encoding 270, and entropy decoding 304.

FIG. 4 is an example block diagram of a video coding device 400 according to an embodiment of this application. The video coding device 400 is applicable for implementing disclosed embodiments as described in this specification. In an embodiment, the video coding device 400 may be a decoder such as the video decoder 30 in FIG. 1a or an encoder such as the video encoder 20 in FIG. 1a.

The video coding device 400 includes an ingress port 410 (or input port 410) and a receiver unit (receiver unit, Rx) 420 that are configured to receive data; a processor, logic unit, or central processing unit (central processing unit, CPU) 430 configured to process the data, for example, the processor 430 herein may be a neural network processing unit 430; a transmitter unit (transmitter unit, Tx) 440 and an egress port 450 (or output port 550) that are configured to transmit the data; and a memory 460 configured to store the data. The video coding device 400 may further include optical-to-electrical (optical-to-electrical, OE) components and electrical-to-optical (electrical-to-optical, EO) components coupled to the ingress port 410, the receiver unit 420, the transmitter unit 440, and the egress port 450 for egress or ingress of optical or electrical signals.

The processor 430 is implemented by hardware and software. The processor 430 may be implemented as one or more processor chips, cores (for example, a multi-core processor), FPGAs, ASICs, and DSPs. The processor 430 is in communication with the ingress port 410, the receiver unit 420, the transmitter unit 440, the egress port 450, and the memory 460. The processor 430 includes a neural network-based codec 470. The neural network-based codec 470 implements embodiments disclosed above. For example, the neural network-based codec 470 performs, processes, prepares, or provides various coding operations. Therefore, a function of the video coding device 400 is substantially improved via the neural network-based codec 470, and switching of the video coding device 400 to a different status is affected. Alternatively, the neural network-based codec 470 is implemented according to instructions stored in the memory 460 and executed by the processor 430.

The memory 460 includes one or more disks, tape drives, and solid-state drives, and may be used as an over-flow data storage device, configured to: store a program when the program is selected for execution, and store instructions and data that are read during program execution. The memory 460 may be volatile and/or non-volatile, and may be a read-only memory (read-only memory, ROM), a random access memory (random access memory, RAM), a ternary content-addressable memory (ternary content-addressable memory, TCAM), and/or static random access memory (static random access memory, SRAM).

FIG. 5 is an example block diagram of an apparatus 500 according to an embodiment of this application. The apparatus 500 may be used as either or both of the source device 12 and the destination device 14 in FIG. 1a.

A processor 502 in the apparatus 500 may be a central processing unit. Alternatively, the processor 502 may be any other type of existing or to-be-developed device or a plurality of devices capable of controlling or processing information. Although the disclosed implementations may be implemented by a single processor such as the processor 502 shown in the figure, a fast speed and high efficiency can be achieved using more than one processor.

In an implementation, a memory 504 in the apparatus 500 may be a read only memory (ROM) device or a random access memory (RAM) device. Any other proper type of storage device may be used as the memory 504. The memory 504 may include code and data 506 that are accessed by the processor 502 through a bus 512. The memory 504 may further include an operating system 508 and an application 510, and the application 510 includes at least one program that allows the processor 502 to perform the method described in this specification. For example, the application 510 may include applications 1 to N, and further includes a video coding application that performs the method described in this specification.

The apparatus 500 may further include one or more output devices such as a display 518. For example, the display 518 may be a touch sensitive display that combines a display with a touch sensitive element that may be configured to sense a touch input. The display 518 may be coupled to the processor 502 through the bus 512.

Although described in this specification as a single bus, the bus 512 in the apparatus 500 may include a plurality of buses. In addition, a secondary memory may be directly coupled to another component in the apparatus 500 or may be accessed via a network, and may include a single integrated unit such as a memory card or a plurality of units such as a plurality of memory cards. Therefore, the apparatus 500 can have various configurations.

### Image coding

Currently, multimedia data accounts for a majority of Internet traffic. Compression of image data plays an important role in storage and efficient transmission of the multimedia data. Therefore, the image coding technology is a very practical technology. It should be noted that Chinese translation of English terms "image coding" and "image encoding" is usually "image coding". Image coding is generalized, and includes encoding an image into a bitstream and decoding (decoding) a bitstream into an image.

Image encoding means only encoding an image into a bitstream. Research of image coding has a long history. Researchers propose a large quantity of methods and formulate an I-frame coding method for various image and video coding standards such as JPEG, JPEG2000, JPEG-XL, JPEG-XX, WebP, H.264/AVC, H.264/HEVC, H.26/VVC, AVS3, and AV1. Most of these coding methods are based on transform, prediction, and entropy coding technologies. Although these coding methods have been widely used currently, a coding method with higher compression efficiency is needed due to an increase in a data amount of an image and emergence of new media types.

### Deep learning-based image coding

In recent years, researchers have studied a deep learning-based image coding method. Some researchers have obtained good results. For example, Balle and others propose an end-to-end optimized image coding method. The method is better than existing best image coding, and is even better than the existing best conventional coding standard H.265/HEVC.

Deep learning-based image coding is based on a deep neural network, and is usually a convolutional neural network. An image coding method based on a transformer network is proposed in some research work. A structure of the deep neural network may be manually designed, or may be obtained through neural architecture search (neural architecture search, NAS). Parameters of the deep neural network are obtained according to a loss function and a back propagation algorithm.

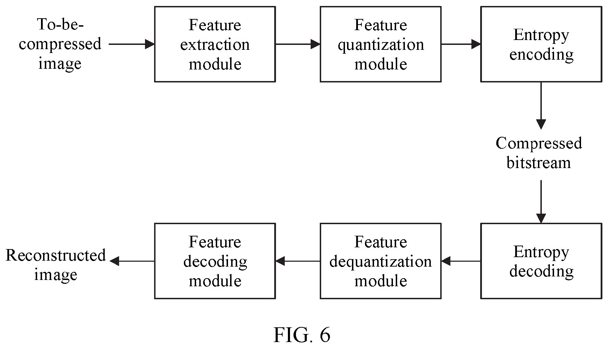

FIG. 6 shows a typical deep learning-based image compression method, which is also referred to as a neural network-based image compression method. Usually, the neural network-based image compression method includes the following parts: a feature extraction module, a feature quantization module, an entropy encoding module, an entropy decoding module, a feature dequantization module, and a feature decoding module. At an encoder side, the feature extraction module may obtain an extracted three-dimensional feature map according to a non-linear mapping activation function and through multi-layer convolution superposition. The feature quantization module quantizes an eigenvalue of a floating-point number by quantizing the eigenvalue, to obtain a quantized eigenvalue. Lossless entropy encoding is performed on the quantized eigenvalue to obtain an encoded bitstream. When an entropy-encoded bitstream is received, a decoder performs lossless entropy decoding to obtain a three-dimensional quantized eigenvalue. The feature decoding module decodes a feature into a reconstructed image, to implement decoding.

After a to-be-compressed image passes through the feature extraction module and the feature quantization module, a three-dimensional feature quantization map is obtained. When processing each eigenvalue in the three-dimensional feature quantization map, the entropy encoding module may obtain a probability distribution of the eigenvalue through estimation based on a processed eigenvalue in a neighboring domain as a context, and perform subsequent encoding based on the probability distribution to obtain an encoded bitstream.

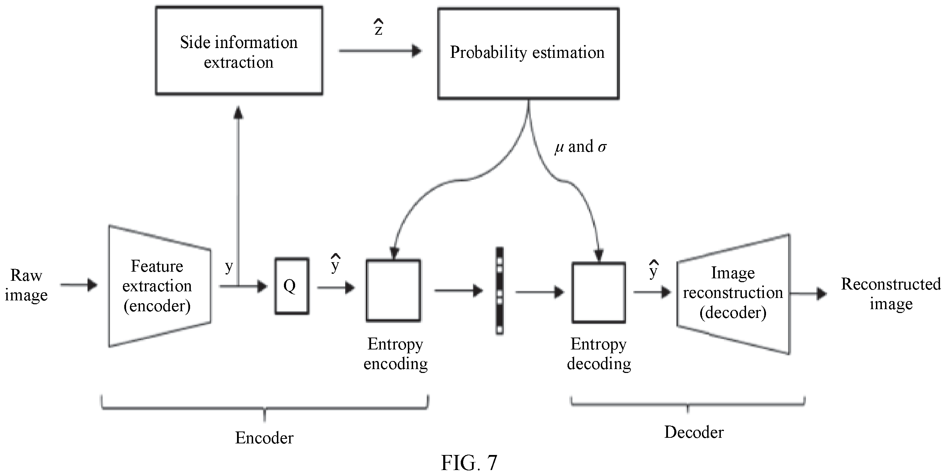

With excellent performance of deep learning in various fields, researchers propose a deep learning-based end-to-end image coding solution. FIG. 7 shows a coding framework. Specific technical solutions are as follows. At an encoder side, a raw image is input into a feature extraction module, and a feature map is output. The feature map passes through a side information extraction module, and side information is output. At the encoder side and a decoder side, the side information is input into a probability estimation module, and a probability distribution of each feature element is output to obtain a value of the to-be-encoded feature element. In addition, the feature map is input into a quantization module to obtain a quantized feature map. The entropy encoding module performs, based on the probability distribution of each feature element, entropy encoding on each feature element, to obtain an encoded bitstream.

At a decoder side, a decoder parses the bitstream, and outputs a probability distribution of a to-be-encoded symbol based on additional information, to obtain a value of a to-be-decoded feature element being k. An entropy decoding module performs, based on the probability distribution of each feature element, arithmetic decoding on each feature element, to obtain a value of the feature element. The feature map is input into an image reconstruction module, and a reconstructed image is output.

### Neural network

The neural network may include a neuron. The neuron may be an operation unit that uses xₛ and an intercept 1 as inputs. An output of the operation unit may be: ${h}_{W , b} \left(x\right) = f \left({W}^{T}x\right) = f \left({\sum }_{s = 1}^{n} {W}_{s} {x}_{s} + b\right)$

Herein, s=s=1, 2, ..., n, where n is a natural number greater than 1, Wₛ is a weight of xₛ, b is a bias of the neuron, and f is an activation function (activation function) of the neuron, and is used to introduce a non-linear feature into the neural network, to convert an input signal in the neuron into an output signal. The output signal of the activation function may be used as an input of a next convolutional layer. The activation function may be a sigmoid function. The neural network is a network formed by connecting a plurality of single neurons. Specifically, an output of one neuron may be an input of another neuron. An input of each neuron may be connected to a local receptive field of a previous layer to extract a feature of the local receptive field. The local receptive field may be a region including several neurons.

### Convolutional neural network

The convolutional neural network (convolutional neural network, CNN) is a deep neural network with a convolutional structure. The convolutional neural network includes a feature extractor, and the feature extractor includes a convolutional layer and a subsampling layer. The feature extractor may be considered as a filter. The convolutional layer is a neuron layer that is in the convolutional neural network and at which convolution processing is performed on an input signal. At the convolutional layer of the convolutional neural network, one neuron may be connected to only a part of adjacent-layer neurons. The convolutional layer usually includes several feature planes, and each feature plane may include some neurons arranged in a rectangle. Neurons of a same feature plane share a weight, and the shared weight herein is a convolution kernel. Weight sharing may be understood as that an image information extraction manner is irrelevant to a location. The convolution kernel may be initialized in a form of a random-size matrix. In a process of training the convolutional neural network, an appropriate weight may be obtained for the convolution kernel through learning. In addition, through weight sharing, connections between layers in the convolutional neural network are directly reduced and an overfitting risk is lowered.

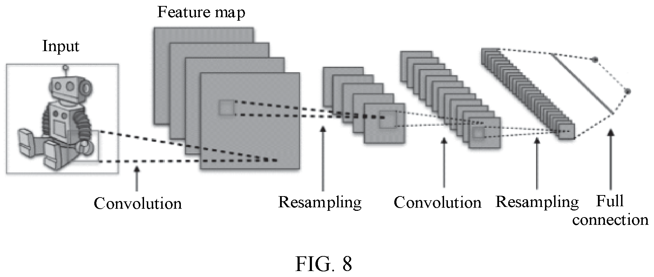

FIG. 8 schematically shows a general concept of processing by a neural network such as a CNN. The convolutional neural network includes an input layer, an output layer, and a plurality of hidden layers. The input layer is a layer that provides an input (for example, a part of an image shown in FIG. 8) for processing. The hidden layers of the CNN usually include a series of convolutional layers, which are convolved with multiplication or other dot products. A result of a layer is one or more feature maps, sometimes referred to as a channel. Subsampling may be involved at a part or all of layers. Therefore, as shown in FIG. 8, the feature map may become smaller. An activation function of the CNN is usually a ReLU (rectified linear unit) layer, followed by additional convolution, such as a pooling layer, a fully connected layer, and a normalization layer, which are referred to as the hidden layers for inputs and outputs of the pooling layer, the fully connected layer, and the normalization layer being hidden by the activation function and final convolution. Although these layers are commonly referred to as the convolution, this is only a convention. Mathematically, the convolution is technically a sliding dot product or cross-correlation. This is important for an index of a matrix because the convolution affects how to determine a weight at a particular index point.

When a CNN used to process an image is programmed, as shown in FIG. 8, an input is a tensor having a shape of (image quantity)×(image width)×(image height)×(image depth). After passing through the convolutional layers, the image is abstracted as a feature map having a shape of (image quantity)×(feature map width)×(feature map height)×(feature map channel). The convolutional layer of the neural network should have the following attributes: a convolution kernel (hyperparameter) defined by a width and a height; quantities (hyperparameters) of input and output channels; and a depth (input channel) of a convolutional filter being equal to a channel quantity (depth) of an input feature map.

In the past, a conventional multi-layer perceptron (MLP) model has been used for image recognition. However, due to full connectivity between nodes, the nodes have high dimensions and cannot be well scaled with images with higher resolution. A 1000×1000 pixel image with RGB color channels has 3 million weights, which is excessively high to be effectively processed on scale in the case of full connectivity. In addition, a data spatial structure is not considered in this network architecture, and input pixels that are far away from each other are processed in a same way as pixels that are close to each other. This ignores locality of reference in image data both computationally and semantically. Therefore, full connectivity of neurons is wasteful for a purpose such as image recognition dominated by a spatial local input mode.

The convolutional neural network is a biologically inspired variant of a multi-layer perceptron, and is specifically designed to simulate behavior of visual cortex. These models alleviate challenges brought by an MLP architecture by utilizing strong spatial local correlations in natural images. The convolutional layer is a core construction block of the CNN. A parameter of the layer includes a set of learnable filters (the foregoing kernels) that have small receptive fields but extend to an entire depth of an input size. During forward passage, each filter performs convolution on a width and a height of the input size, calculates a dot product between an entry and an input of the filter, and generates a two-dimensional activation map of the filter. Therefore, a network learning filter is activated when detecting a specific type of feature at a specific spatial location in the input.

Activation maps of all filters are stacked along a depth dimension to form a complete output size of the convolutional layer. Therefore, each entry in the output size may also be interpreted as an output of a neuron that observes a small region in the input and shares a parameter with a neuron in a same activation map. A feature map or an activation map is output activation of a given filter. The feature map and the activation have a same meaning. In some papers, the activation is referred to as the activation map due to the activation being mapping corresponding to activation of different parts of an image, and is also the feature map due to the activation being mapping for discovering a feature in the image. High activation means that a function is found.

Another important concept of a cellular neural network is pooling, which is a form of non-linear downsampling. There are several non-linear functions that can implement pooling, where maximum pooling is most common. The maximum pooling divides an input image into a group of non-overlapping rectangles, and outputs a maximum value for each of these sub-regions.

Intuitively, in comparison with another feature, an exact location of a feature is less important than a rough location of the feature. This is an idea of using pooling in the convolutional neural network. The pooling layer is used to gradually reduce a size of represented space, reduce a quantity of parameters, memory usage, and a calculation amount that are in the network, and therefore control overfitting. In a CNN architecture, it is common to periodically insert pooling layers between consecutive convolutional layers. A pooling operation provides another form of translation invariance.

The pooling layer independently operates each input depth slice, and adjusts a size of the input depth slice in space. A most common form is a pooling layer with a filter whose size is 2×2 that applies two downsampling steps along a width and a height on each depth slice in an input and discards 75% activation. In this case, each maximum operation exceeds four digits. A depth size remains unchanged.

In addition to the maximum pooling, a pool unit may alternatively use another function, such as average pooling or ℓ2-norm pooling. The average pooling has been used frequently in history. However, the average pooling has been recently used less compared to the maximum pooling, and performance of the maximum pooling is better in practice. Due to a significant decrease in a representation size, there has been a recent trend to use a smaller filter or discard the pooling layer completely. "Region of interest" pooling (also referred to as ROI pooling) is a variant of the maximum pooling, with a fixed output size and an input rectangle being a parameter. Pooling is an important part of a convolutional neural network for object detection based on a fast R-CNN architecture.

A ReLU is short for a rectified linear unit that uses a non-saturated activation function. By setting a negative value to zero, the ReLU can effectively remove a negative value from an activation mapping. The ReLU increases non-linear features for a decision-making function and the whole network without affecting a receptive field of a convolutional layer. Other functions are also used to increase non-linearity, such as a saturated hyperbolic tangent function and an S-shaped function. The ReLU is often more popular than another function because the ReLU trains a neural network several times faster without significantly affecting generalization accuracy.

After several convolutional layers and a maximum pooling layer, advanced inference in the neural network is completed by the fully connected layer. Neurons at the fully connected layer are connected to all activation at a previous layer, as seen in a regular (non-convolutional) artificial neural network. Therefore, activation of the neurons at the fully connected layer may be calculated as an affine transformation, and matrix multiplication is followed by a bias (addition of vectors that learn or fix bias terms).

A "loss layer" specifies training a way to punish a deviation between prediction (output) and an actual label, and is usually a last layer of the neural network. Various loss functions suitable for different tasks can be used. A softmax loss function is used to predict a single class in K mutually exclusive classes. A sigmoid cross entropy loss function is used to predict K independent probability values in [0, 1]. A Euclidean loss function is used to return to an actual-value label.

In conclusion, FIG. 8 shows a data flow in a typical convolutional neural network. An input image passes through a convolutional layer and is abstracted as a feature map including several channels that correspond to a quantity of filters in a group of learnable filters (for example, one channel per filter) at the layer. The feature map is subsampled by, for example, the pooling layer. This reduces a quantity of dimensions of each channel of the feature map. Subsequent data enters another convolutional layer, and the layer may have different quantities of output channels, resulting in different quantities of channels of the feature map. As described above, quantities of input and output channels are hyperparameters of the layer. To establish network connectivity, these parameters need to be synchronized between two connected layers. For example, a quantity of input channels of a current layer should be equal to a quantity of output channels of a previous layer. For a first layer for processing input data (for example, an image), a quantity of input channels is usually equal to a channel quantity represented by the data, for example, three channels represented by RGB or YUV for an image or video, or one channel represented by a gray-scale image or video.

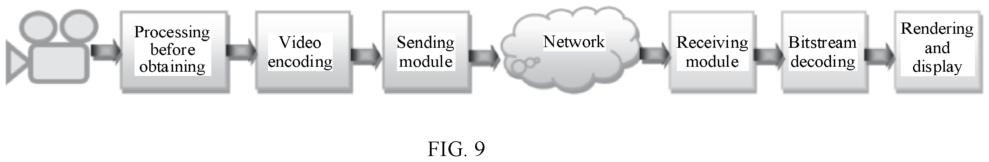

The present invention is applied to a video codec, for example, a video codec in a video communication system. As shown in FIG. 9, after a video capturing device is used to capture a video, a series of pre-processing is performed on the video, and compression and encoding are performed on the processed video to obtain an encoded bitstream. A sending module sends the bitstream to a receiving module via a transmission network. After the bitstream is decoded by a decoder, the bitstream can be rendered and displayed. In addition, the bitstream obtained through video encoding may also be directly stored.

The present invention describes an enhancement layer-oriented neural network-based encoding and decoding scheme, and an application scenario of the enhancement layer-oriented neural network-based encoding and decoding scheme may be a hierarchical coding scheme.

The present invention may be applied to an apparatus or a product that includes a video encoder and/or decoder function, for example, a video processing software and hardware product, for example, a chip, and a product or an apparatus that includes such a chip, for example, a media product such as a mobile phone.

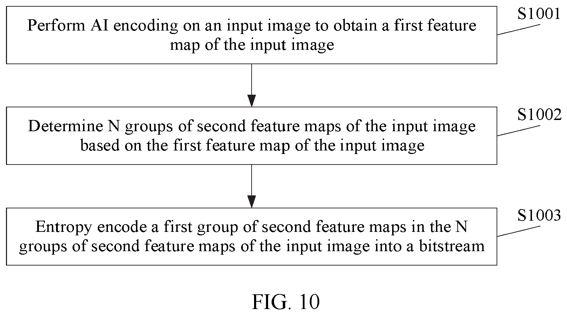

FIG. 10 shows an encoding method according to an embodiment of this application. As shown in FIG. 10, the method includes the following steps.

S1001: Perform AI encoding on an input image to obtain a first feature map of the input image.

A reconstructed image may be obtained by decoding any one of N groups of second feature maps, where N is a positive integer.

The first feature map is three-dimensional data. As shown in FIG. 8, a three-dimensional feature map includes a plurality of two-dimensional feature maps, and each two-dimensional feature map includes a plurality of elements (pixels). Each two-dimensional feature map corresponds to a channel (for example, an RPG channel) in a channel dimension.

In a possible implementation, a feature extraction module of an AI encoder may perform feature extraction on the input image to obtain the first feature map of the input image.

For example, a feature extraction module of a JPEG AI encoder may perform feature extraction on the input image to obtain the first feature map of the input image.

S1002: Determine the N groups of second feature maps of the input image based on the first feature map of the input image, where
N is a positive integer. For example, N may be 1, 2, 3, 4, 5, 6, 7, 8, 9, 10, or another positive integer. The any one of the N groups of second feature maps can be decoded to obtain the reconstructed image.

The second feature map is two-dimensional data. As shown in FIG. 8, the three-dimensional feature map shown in FIG. 8 includes the plurality of two-dimensional feature maps, and each two-dimensional feature map corresponds to the channel in the channel dimension. In this case, the three-dimensional feature map may be grouped into the plurality of two-dimensional feature maps in the channel dimension.

For example, for a three-dimensional feature map with 192 channels, channel separation may be performed on the three-dimensional feature map in the channel dimension to obtain 192 two-dimensional feature maps.

In a possible implementation, channel separation may be performed on the first feature map to obtain M second feature maps of the input image. The M second feature maps are grouped based on channel information of second feature maps of the input image to obtain the N groups of second feature maps, where M is a positive integer, and M≤N. For example, M may be 1, 2, 3, 4, 5, 6, 7, 8, 9, 10, or another positive integer.

M may be a channel quantity of the first feature map.

In a possible implementation, the channel information includes channel entropies and/or channel variances. The channel entropies are entropies of all elements in the channel, and the channel variances are variances of all the elements in the channel.

For example, each group of second feature maps includes K second feature maps. K second feature maps with highest channel variances may be grouped into a first group, K second feature maps with second highest channel variances may be grouped into a second group, ..., K second feature maps with second lowest channel variances may be grouped into an (N-1)^{th} group, and K second feature maps with lowest channel variances may be grouped into an N^{th} group.

For another example, each group of second feature maps includes K second feature maps. K second feature maps with highest channel entropies may be grouped into a first group, K second feature maps with second highest channel entropies may be grouped into a second group, ..., K second feature maps with second lowest channel entropies may be grouped into an (N-1)^{th} group, and K second feature maps with lowest channel entropies may be grouped into an N^{th} group.

For another example, for example, each group of second feature maps includes K second feature maps, and the second feature maps may be numbered in ascending order of the channel entropies. Then, K second feature maps with highest numbers are grouped into a first group, K second feature maps with second highest numbers are grouped into a second group, ..., K second feature maps with second lowest numbers are grouped into an (N-1)^{th} group, and K second feature maps with lowest numbers are grouped into an N^{th} group.

For example, if the first feature map has 384 channels, channel separation may be performed on the first feature map to obtain 384 second feature maps of the input image. Then, based on channel entropies of the 384 second feature maps, 192 second feature maps with highest channel entropies in the 384 second feature maps are grouped into one group, and 192 second feature maps with lowest channel entropies are grouped into another group.

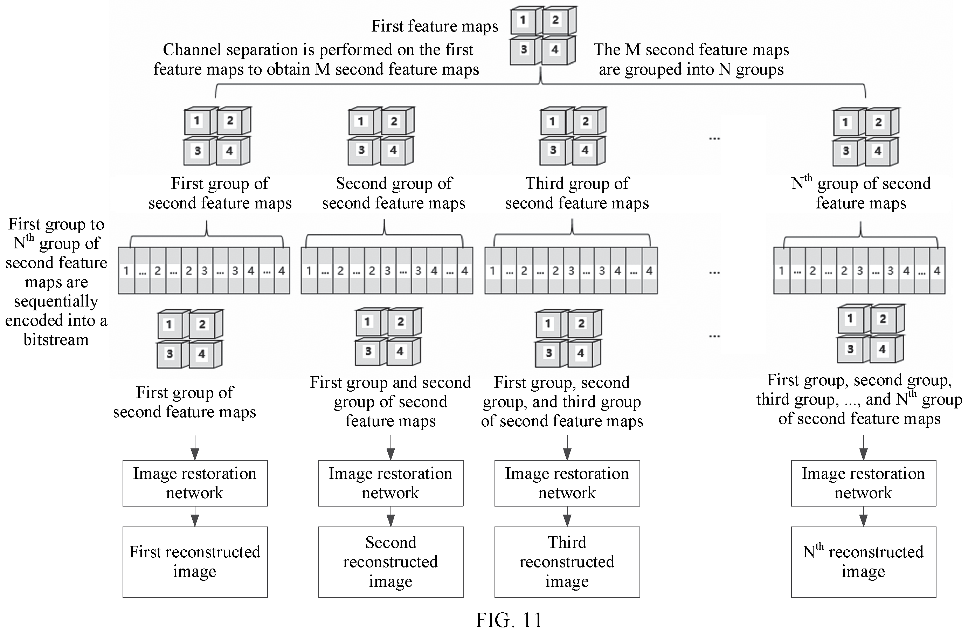

For another example, as shown in FIG. 11, channel separation may be performed on the first feature map to obtain the M second feature maps of the input image, and the M second feature maps are grouped into the N groups in descending order of channel entropies or channel variances of the M second feature maps.

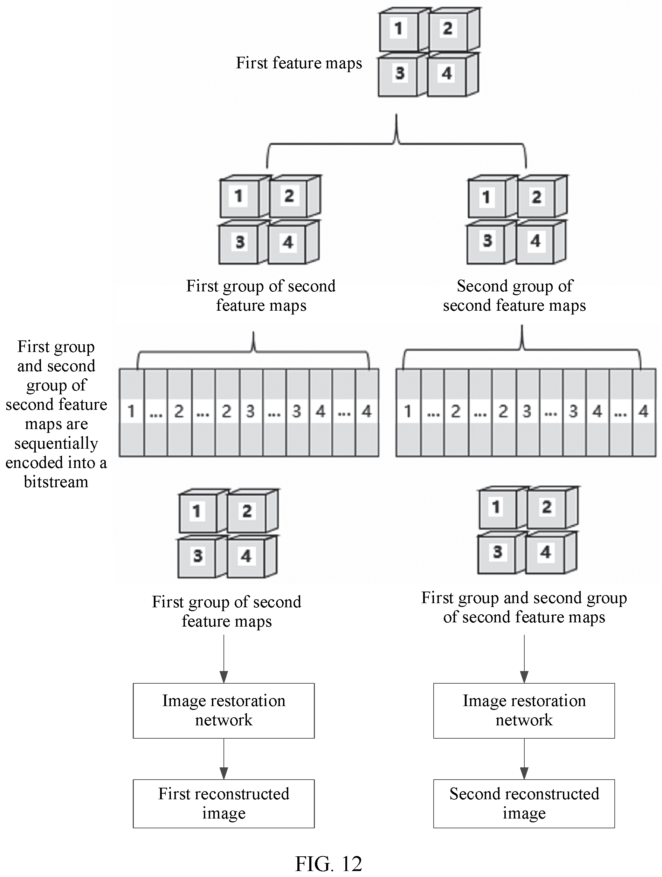

For another example, as shown in FIG. 12, channel separation may be performed on the first feature map to obtain the M second feature maps of the input image, and the M second feature maps are grouped into two groups in descending order of channel entropies or channel variances of the M second feature maps.

S1003: Entropy encode the first group of second feature maps in the N groups of second feature maps of the input image into a bitstream.

In a possible implementation, the first group of second feature maps in the N groups of second feature maps of the input image may be entropy encoded into the bitstream based on an asymmetric numeral system (asymmetric numeral system, ANS).

In a possible implementation, the second group of second feature maps in the N groups of second feature maps may be further entropy encoded into the bitstream.

In a possible implementation, the third group of second feature maps in the N groups of second feature maps may be further entropy encoded into the bitstream.

In a possible implementation, at least one of the N groups of second feature maps may be entropy encoded into the bitstream in descending order of the channel entropies or the channel variances.

For example, as shown in FIG. 11, after the M second feature maps of the input image are grouped into the N groups, the N groups of second feature maps of the input image may be entropy encoded into the bitstream in descending order of channel entropies or channel variances.

For another example, as shown in FIG. 12, after the M second feature maps of the input image are grouped into the two groups, the two groups of second feature maps of the input image may be entropy encoded into the bitstream in descending order of channel entropies or channel variances.

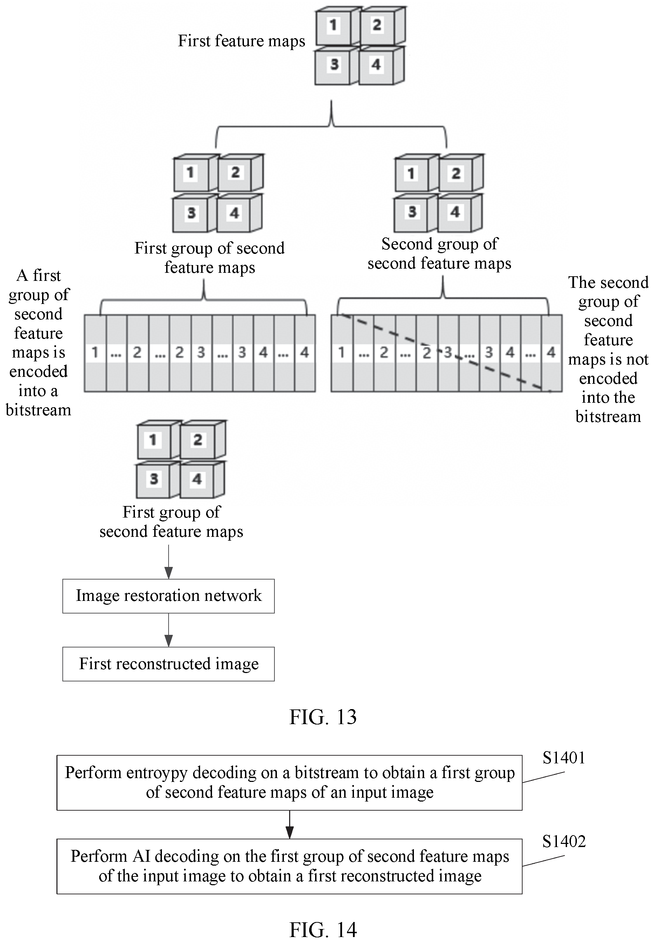

For another example, as shown in FIG. 13, after the M second feature maps of the input image are grouped into the two groups, only a first group of second feature maps of the input image may be entropy encoded into the bitstream in descending order of channel entropies or channel variances.

It can be learned that, in the method provided in this embodiment of this application, a part of feature maps of the input image may be encoded by using a progressive encoding method. In comparison with encoding all the feature maps of the input image, encoding the part of feature maps of the input image can shorten an image encoding latency. In addition, the first group of second feature maps of the input image are feature maps having a largest channel entropy (variance) in the N groups of second feature maps of the input image, and a decoder side can obtain a complete reconstructed image based on the feature maps.

For example, in a scenario in which a network environment is poor or decoding hardware resources are insufficient, the progressive encoding method is used in this embodiment of this application, not all the feature maps are needed, and the complete reconstructed image can be obtained through decoding based on only the first group of second feature maps, thereby shortening image encoding and decoding latencies.

In a possible implementation, channel quantity information may be encoded into the bitstream. The channel quantity information indicates a channel quantity of the at least one group of second feature maps encoded into the bitstream. In this way, the decoder side can determine a channel quantity of each group of second feature maps in the bitstream by decoding the channel quantity information, to help the decoder side restore the feature maps from the bitstream.

For example, channel quantities of the first group of second feature maps, the second group of second feature maps, and the third group of second feature maps are: 4, 3, and 3. Channel quantity information of 4, 3, and 3 may be encoded into the bitstream.

In a possible implementation, first location information may be encoded into the bitstream. The first location information indicates locations, in the first feature map, of the at least one group of second feature maps encoded into the bitstream. In this way, the decoder side can determine locations of each group of second feature maps in the first feature map by decoding the first location information, to help the decoder side restore, from the bitstream, the feature map that is not grouped.

It should be noted that the decoder side needs to use the location of the second feature map in the first feature map to decode the second feature map. However, a location of the second feature map in the bitstream may be different from the location of the second feature map in the first feature map. Therefore, the first location information on which the locations, in the first feature map, of the at least one group of second feature maps encoded into the bitstream is recorded needs to be encoded into the bitstream.

For example, 10 second feature maps are obtained through channel separation from the first feature map, and locations of the 10 second feature maps in the first feature map are denoted as: 1, 2, 3, 4, 5, 6, 7, 8, 9, and 10. The 10 second feature maps are grouped, sorted, and encoded into the bitstream in a sequence of 2, 9, 4, 7, 1, 5, 3, 6, 10, and 8. In this case, first location information of 2, 9, 4, 7, 1, 5, 3, 6, 10, and 8 may be encoded into the bitstream. After obtaining the information, the decoder side may learn that a location, of a 1^{st} second feature map obtained through decoding, in the first feature map is 2, a location of a 2^{nd} second feature map in the first feature map is 9, ..., and a location of a 10^{th} second feature map in the first feature map is 8.

In a possible implementation, second location information may be encoded into the bitstream. The second location information indicates locations, in the bitstream, of the at least one group of second feature maps encoded into the bitstream. In this way, the decoder side can determine the locations of each group of second feature maps in the bitstream based on the second location information, to help the decoder side perform parallel decoding.

In a possible implementation, bitstream length information may be encoded into the bitstream. The bitstream length information indicates a length of the bitstream. In this way, the decoder side can determine the length of the bitstream based on the bitstream length information, to help the decoder side perform parallel decoding.

FIG. 14 shows a decoding method according to an embodiment of this application. As shown in FIG. 14, the method includes the following steps.

S1401: Perform entropy decoding on a bitstream to obtain a first group of second feature maps of an input image.

The first group of second feature maps is a part of feature maps corresponding to the input image.

In a possible implementation, ANS entropy decoding may be performed on the bitstream to obtain the first group of second feature maps of the input image.

In a possible implementation, entropy decoding may be further performed on the bitstream to obtain a second group of second feature maps of the input image.

In a possible implementation, entropy decoding may be further performed on the bitstream to obtain a third group of second feature maps of the input image.

In a possible implementation, entropy decoding may be further performed on the bitstream to sequentially obtain L groups of second feature maps of the image. L is a positive integer, and L is less than or equal to N.

For example, as shown in FIG. 11, entropy decoding may be performed on the bitstream to sequentially obtain N groups of second feature maps of the image.

For another example, as shown in FIG. 12, entropy decoding is performed on the bitstream to obtain the first group of second feature maps of the input image, and entropy decoding is performed on the bitstream to obtain the second group of second feature maps of the input image.

For another example, as shown in FIG. 13, entropy decoding may be performed on the bitstream to obtain only the first group of second feature maps of the input image.

S1402: Perform AI decoding on the first group of second feature maps of the input image to obtain a first reconstructed image.

In a possible implementation, AI decoding may be performed on the first group of second feature maps of the input image via an image restoration network of an AI decoder, to obtain the first reconstructed image.

For example, AI decoding may be performed on the first group of second feature maps of the input image via an image restoration network of a JPEG AI decoder, to obtain the first reconstructed image.

It should be noted that the first reconstructed image is not a partial image of the input image, but a reconstructed image that has a same size as the input image but has different image quality.

In a possible implementation, each time a group of second feature maps is obtained through decoding, the group of second feature maps may be combined with other second feature maps that have been obtained through decoding, both of which are sent to a subsequent image restoration network for image restoration.

For example, after the second group of second feature maps of the input image is obtained through AI decoding, AI decoding may be performed on the first group of second feature maps and the second group of second feature maps to obtain the second reconstructed image.

For example, after the third group of second feature maps of the input image is obtained through AI decoding, AI decoding may be performed on the first group of second feature maps, the second group of second feature maps, and the third group of second feature maps to obtain a third reconstructed image.

In a possible implementation, image quality of the second reconstructed image is better than image quality of the first reconstructed image, and image quality of the third reconstructed image is better than image quality of the second reconstructed image.

The image quality is represented by any one of the following variables: a PSNR, an MS-SSIM, or an LPIPS.

For example, as shown in FIG. 11, after the first group of second feature maps of the input image is decoded, the first group of second feature maps of the input image may be input into the image restoration network to obtain the first reconstructed image. After the second group of second feature maps is decoded, the first group of second feature maps of the input image and the second group of second feature maps of the input image may be input into the image restoration network to obtain the second reconstructed image. After the third group of second feature maps of the input image is decoded, the first group of second feature maps of the input image, the second group of second feature maps of the input image, and the third group of second feature maps of the input image may be input into the image restoration network to obtain the third reconstructed image. After an (N-1)^{th} group of second feature maps of the input image is decoded, the first group of second feature maps of the input image, the second group of second feature maps of the input image, the third group of second feature maps of the input image, ..., and the (N-1)^{th} group of second feature maps of the input image may be input into the image restoration network to obtain an (N-1)^{th} reconstructed image. After an N^{th} group of second feature maps of the input image is decoded, the first group of second feature maps of the input image, the second group of second feature maps of the input image, the third group of second feature maps of the input image, ..., the (N-1)^{th} group of second feature maps of the input image, and the N^{th} group of second feature maps of the input image may be input into the image restoration network to obtain an N^{th} reconstructed image.

It should be noted that image quality of the first reconstructed image to the N^{th} reconstructed image increases sequentially, that is, the image quality of the first reconstructed image<the image quality of the second reconstructed image<the image quality of the third reconstructed image<...<image quality of the (N-1)^{th} reconstructed image<image quality of the N^{th} reconstructed image.

For another example, as shown in FIG. 12, after the first group of second feature maps of the input image is decoded, the first group of second feature maps of the input image may be input into the image restoration network to obtain the first reconstructed image. After the second group of second feature maps of the input image is decoded, the first group of second feature maps of the input image and the second group of second feature maps of the input image may be input into the image restoration network to obtain the second reconstructed image.

For another example, as shown in FIG. 13, after the first group of second feature maps of the input image is decoded, the first group of second feature maps of the input image may be input into the image restoration network to obtain the first reconstructed image.

It can be learned that, in the method provided in this embodiment of this application, the reconstructed image may be determined based on the part of feature maps of the input image. In comparison with determining the reconstructed image based on all feature maps of the input image, determining the reconstructed image based on the part of feature maps of the input image by using a progressive decoding method can shorten an image decoding latency. In addition, the first group of second feature maps of the input image are feature maps having a largest channel entropy (variance) in the second feature maps of the input image, and a decoder side can obtain a complete reconstructed image based on the feature maps.

For example, in a scenario in which a network environment is poor or decoding hardware resources are insufficient, the progressive decoding method is used in this embodiment of this application, the complete reconstructed image can be obtained through decoding based on only the first group of second feature maps.

In a possible implementation, the bitstream may be decoded to obtain channel quantity information. The channel quantity information indicates a channel quantity of at least one group of second feature maps obtained through decoding. AI decoding is performed on the first group of second feature maps based on the channel quantity information to obtain the first reconstructed image.

For example, channel quantities of the first group of second feature maps, the second group of second feature maps, and the third group of second feature maps are: 4, 3, and 3. Channel quantity information of 4, 3, and 3 may be encoded into the bitstream. Correspondingly, after obtaining the channel quantity information through decoding, the decoder side may learn that the first group of second feature maps of the input image can be decoded only after second feature maps of four channels are obtained through decoding in a first time of decoding, the second group of second feature maps of the input image can be decoded only after second feature maps of four channels are obtained through decoding in a second time of decoding, and the third group of second feature maps of the input image can be decoded only after second feature maps of three channels are obtained through decoding in a third time of decoding.

In a possible implementation, the bitstream may be decoded to obtain first location information. The first location information indicates locations, of the at least one group of second feature maps obtained through decoding, in a first feature map of the input image. AI decoding may be performed on the first group of second feature maps based on the first location information to obtain the first reconstructed image.

For example, 10 second feature maps are obtained through channel separation from the first feature map, and locations of the 10 second feature maps in the first feature map are denoted as: 1, 2, 3, 4, 5, 6, 7, 8, 9, and 10. The 10 second feature maps are grouped, sorted, and encoded into the bitstream in a sequence of 2, 9, 4, 7, 1, 5, 3, 6, 10, and 8. In this case, first location information of 2, 9, 4, 7, 1, 5, 3, 6, 10, and 8 may be encoded into the bitstream. After obtaining the information, the decoder side may learn that a location, of a 1^{st} second feature map obtained through decoding, in the first feature map is 2, a location of a 2^{nd} second feature map in the first feature map is 9, ..., and a location of a 10^{th} second feature map in the first feature map is 8.

The 1^{st} second feature map obtained through decoding is placed at the location 2 in the first feature map to perform image restoration, the 2^{nd} second feature map obtained through decoding is placed at the location 9 in the first feature map to perform image restoration, ..., and the 10^{th} second feature map obtained through decoding is placed at the location 8 in the first feature map to perform image restoration.

In a possible implementation, the bitstream may be decoded to obtain second location information. The second location information indicates locations, of the at least one group of second feature maps obtained through decoding, in the bitstream. Bit data corresponding to the first group of second feature maps in the bitstream is determined based on the second location information, and entropy decoding is performed on the corresponding bit data to obtain the first group of second feature maps.

For example, corresponding locations of bit data of the first group of second feature maps, the second group of second feature maps, and the third group of second feature maps in the bitstream are: A1 to A2, A3 to A4, and A5 to A6. Second location information of A1 to A2, A3 to A4, and A5 to A6 may be encoded into the bitstream. Correspondingly, after obtaining the second location information through decoding, the decoder side may learn that the first group of second feature maps may be obtained by decoding bit data at the locations A1 to A2 in the bitstream, the second group of second feature maps may be obtained by decoding bit data at the locations A3 to A4 in the bitstream, and the third group of second feature maps may be obtained by decoding bit data at the locations A5 to A6 in the bitstream.

In a possible implementation, the bitstream may be decoded to obtain bitstream length information of the bitstream. The bitstream length information indicates a length of the bitstream. AI decoding is performed on the first group of second feature maps based on the bitstream length information to obtain the first reconstructed image.

For example, decoding duration may be estimated based on the length of the bitstream. When the estimated decoding duration is greater than preset duration, the progressive decoding method is used, that is, entropy decoding is performed on the bitstream to obtain a part of second feature maps of the input image. AI decoding is performed on the part of second feature maps to obtain the reconstructed image of the input image.

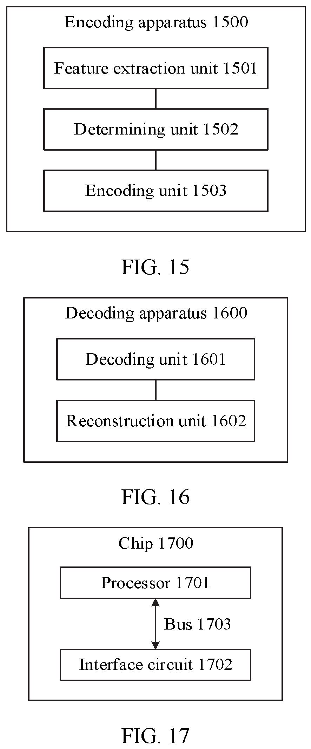

The following describes, with reference to FIG. 15, an encoding apparatus configured to perform the foregoing encoding method.

It may be understood that, to implement the foregoing function, the encoding apparatus includes a corresponding hardware and/or software module for performing the function. Algorithm and steps in the examples described with reference to embodiments disclosed herein may be implemented by hardware or a combination of hardware and computer software in embodiments of this application. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of embodiments of this application.

In embodiments of this application, the encoding apparatus may be divided into function modules based on the foregoing method examples. For example, each function module may be obtained through division based on each corresponding function, or two or more functions may be integrated into one processing module. The integrated module may be implemented in a form of hardware. It should be noted that module division in embodiments is an example, and is merely logical function division. During actual implementation, another division manner may be used.

When each function module is obtained through division based on each corresponding function, FIG. 15 is a diagram of possible composition of the encoding apparatus in the foregoing embodiment. The apparatus may be an electronic device, or may be a module (for example, a processor, a chip, or a chip system) used in the electronic device, or may be a logical node, a logical module, or software that can implement a part or all of functions of the electronic device. As shown in FIG. 15, the encoding apparatus 1500 may include an encoding unit 1501 and a determining unit 1502.

The encoding unit 1501 is configured to perform AI encoding on an input image to obtain a first feature map of the input image.

The determining unit 1502 is configured to determine N groups of second feature maps of the input image based on the first feature map, where N is a positive integer.

The encoding unit 1501 is further configured to entropy encode a first group of second feature maps in the N groups of second feature maps into a bitstream.

In a possible implementation, the encoding unit 1501 is further configured to entropy encode a second group of second feature maps in the N groups of second feature maps into the bitstream.

In a possible implementation, the encoding unit 1501 is further configured to entropy encode a third group of second feature maps in the N groups of second feature maps into the bitstream.

In a possible implementation, the determining unit 1502 is specifically configured to: perform channel separation on the first feature map to obtain M second feature maps of the input image, where M is a positive integer; and group the M second feature maps based on channel information of second feature maps of the input image to obtain the N groups of second feature maps.

In a possible implementation, the encoding unit 1501 is further configured to entropy encode at least one of the N groups of second feature maps into the bitstream in descending order of channel entropies or channel variances.

In a possible implementation, the encoding unit 1501 is further configured to encode channel quantity information into the bitstream. The channel quantity information indicates a channel quantity of the at least one group of second feature maps encoded into the bitstream.

In a possible implementation, the encoding unit 1501 is further configured to encode first location information into the bitstream. The first location information indicates locations, in the first feature map, of the at least one group of second feature maps encoded into the bitstream.

In a possible implementation, the encoding unit 1501 is further configured to encode second location information into the bitstream. The second location information indicates locations, in the bitstream, of the at least one group of second feature maps encoded into the bitstream.

In a possible implementation, the encoding unit 1501 is further configured to encode bitstream length information into the bitstream. The bitstream length information indicates a length of the bitstream.

The following describes, with reference to FIG. 16, a decoding apparatus configured to perform the foregoing decoding method.

It may be understood that, to implement the foregoing function, the decoding apparatus includes a corresponding hardware and/or software module for performing the function. Algorithm and steps in the examples described with reference to embodiments disclosed herein may be implemented by hardware or a combination of hardware and computer software in embodiments of this application. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of embodiments of this application.

In embodiments of this application, the decoding apparatus may be divided into function modules based on the foregoing method examples. For example, each function module may be obtained through division based on each corresponding function, or two or more functions may be integrated into one processing module. The integrated module may be implemented in a form of hardware. It should be noted that module division in embodiments is an example, and is merely logical function division. During actual implementation, another division manner may be used.

When each function module is obtained through division based on each corresponding function, FIG. 16 is a diagram of possible composition of the decoding apparatus in the foregoing embodiment. The apparatus may be an electronic device, or may be a module (for example, a processor, a chip, or a chip system) used in the electronic device, or may be a logical node, a logical module, or software that can implement a part or all of functions of the electronic device. As shown in FIG. 16, the decoding apparatus 1600 may include a decoding unit 1601 and a reconstruction unit 1602.

The decoding unit 1601 is configured to perform entropy decoding on a bitstream to obtain a first group of second feature maps of an input image, where N is a positive integer.

The reconstruction unit 1602 is configured to perform AI decoding on the first group of second feature maps to obtain a first reconstructed image of the input image.

In a possible implementation, the decoding unit 1601 is further configured to perform entropy decoding on the bitstream to obtain a second group of second feature maps of the input image.

In a possible implementation, the reconstruction unit 1602 is further configured to perform AI decoding on the first group of second feature maps and the second group of second feature maps to obtain a second reconstructed image of the input image.

In a possible implementation, the decoding unit 1601 is further configured to perform entropy decoding on the bitstream to obtain a third group of second feature maps of the input image.

In a possible implementation, the reconstruction unit 1602 is further configured to perform AI decoding on the first group of second feature maps, the second group of second feature maps, and the third group of second feature maps to obtain a third reconstructed image of the input image.

In a possible implementation, image quality of the second reconstructed image is better than image quality of the first reconstructed image, and image quality of the third reconstructed image is better than image quality of the second reconstructed image. The image quality is represented by any one of the following variables: a PSNR, an MS-SSIM, or an LPIPS.

In a possible implementation, the decoding unit 1601 is further configured to decode the bitstream to obtain channel quantity information. The channel quantity information indicates a channel quantity of at least one group of second feature maps obtained through decoding.

In a possible implementation, the reconstruction unit 1602 is further configured to perform AI decoding on the first group of second feature maps based on the channel quantity information to obtain the first reconstructed image.

In a possible implementation, the decoding unit 1601 is further configured to decode the bitstream to obtain first location information. The first location information indicates locations, of the at least one group of second feature maps obtained through decoding, in a first feature map of the input image.

In a possible implementation, the reconstruction unit 1602 is further configured to perform AI decoding on the first group of second feature maps based on the first location information to obtain the first reconstructed image.

In a possible implementation, the decoding unit 1601 is further configured to decode the bitstream to obtain second location information. The second location information indicates locations, of the at least one group of second feature maps obtained through decoding, in the bitstream.

In a possible implementation, the decoding unit 1601 is further configured to: determine, based on the second location information, bit data corresponding to the first group of second feature maps in the bitstream, and perform entropy decoding on the corresponding bit data to obtain the first group of second feature maps.

In a possible implementation, the decoding unit 1601 is further configured to decode the bitstream to obtain bitstream length information of the bitstream. The bitstream length information indicates a length of the bitstream.

In a possible implementation, the reconstruction unit 1602 is further configured to perform AI decoding on the first group of second feature maps based on the bitstream length information to obtain the first reconstructed image.

An embodiment of this application further provides a chip. The chip may be a chip of the foregoing encoding apparatus or decoding apparatus. FIG. 17 is a diagram of a structure of a chip 1700. The chip 1700 includes one or more processors 1701 and an interface circuit 1702. Optionally, the chip 1700 may further include a bus 1703.

The processor 1701 may be an integrated circuit chip with a signal processing capability. In an implementation process, the steps of the foregoing encoding method and decoding method may be implemented via an integrated logic circuit of hardware in the processor 1701, or according to instructions in a form of software.

Optionally, the processor 1701 may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The processor 1701 may implement or perform the methods and steps that are disclosed in embodiments of this application. The general-purpose processor may be a microprocessor, or the processor may be any conventional processor or the like.

The interface circuit 1702 may be configured to send or receive data, instructions, or information. The processor 1701 may perform processing based on the data, the instructions, or other information received by the interface circuit 1702, and may send processed information via the interface circuit 1702.

Optionally, the chip further includes a memory. The memory may include a read-only memory and a random access memory, and provide operation instructions and data for the processor. A part of the memory may further include a non-volatile random access memory (non-volatile random access memory, NVRAM).

Optionally, the memory stores an executable software module or a data structure, and the processor may perform a corresponding operation by invoking the operation instructions stored in the memory (the operation instructions may be stored in an operating system).

Optionally, the chip may be used in the encoding apparatus or the decoding apparatus in embodiments of this application. Optionally, the interface circuit 1702 may be configured to output an execution result of the processor 1701. For the encoding method and the decoding method provided in one or more of embodiments of this application, refer to the foregoing embodiments. Details are not described herein again.

It should be noted that functions respectively corresponding to the processor 1701 and the interface circuit 1702 may be implemented by using a hardware design, may be implemented by using a software design, or may be implemented in a combination of software and hardware. This is not limited herein.

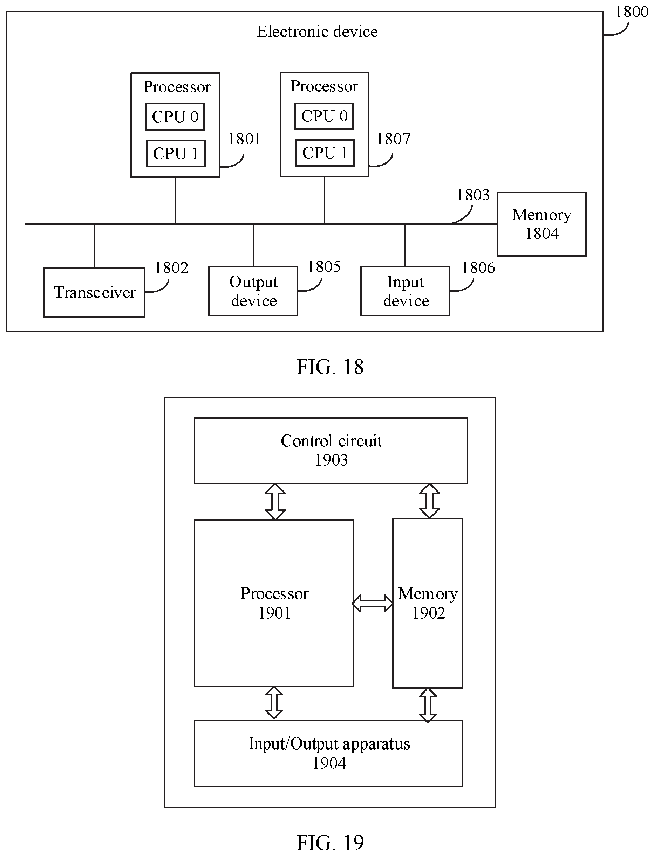

FIG. 18 is a diagram of a structure of an electronic device according to an embodiment of this application. The electronic device may be an encoding apparatus or a decoding apparatus, a chip or a function module in the encoding apparatus, or a chip or a function module in the decoding apparatus. As shown in FIG. 18, the electronic device 1800 includes a processor 1801, a transceiver 1802, and a communication line 1803.

The processor 1801 is configured to perform any step in the encoding method and the decoding method in embodiments of this application, and in a process of performing any step in the encoding method and the decoding method provided in embodiments of this application, may select to invoke the transceiver 1802 and the communication line 1803 to complete a corresponding operation.

Further, the electronic device 1800 may further include a memory 1804. The processor 1801, the memory 1804, and the transceiver 1802 may be connected through the communication line 1803.

The processor 1801 is a processor, a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 1801 may be another apparatus having a processing function, for example, a circuit, a component, or a software module. This is not limited.

The transceiver 1802 is configured to communicate with another device or another communication network. The another communication network may be an Ethernet, a radio access network (radio access network, RAN), a wireless local area network (wireless local area network, WLAN), or the like. The transceiver 1802 may be a module, a circuit, a transceiver, or any apparatus that can implement communication.

The transceiver 1802 is mainly configured to receive and send commands, information, and the like, and may include a transmitter and a receiver that separately send and receive the commands, the information, and the like. An operation other than receiving and sending the commands, the information, and the like is implemented by the processor.

The communication line 1803 is configured to transmit information between components included in the electronic device 1800.

In a design, the processor may be considered as a logic circuit, and the transceiver may be considered as an interface circuit.

The memory 1804 is configured to store instructions. The instructions may be a computer program.

The memory 1804 may be a volatile memory or a non-volatile memory, or may include both volatile and non-volatile memories. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitation, RAMs in a plurality of forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). The memory 1804 may alternatively be a compact disc read-only memory (compact disc read-only memory, CD-ROM) or another compact disc storage, an optical disk storage (including a compact disc, a laser disc, an optical disc, a digital versatile disc, a Blu-ray disc, and the like), a magnetic disk storage medium, another magnetic storage device, or the like. It should be noted that the memory of the systems and methods described in this specification includes but is not limited to these and any other proper types of memories.

It should be noted that the memory 1804 may be independent of the processor 1801, or may be integrated with the processor 1801. The memory 1804 may be configured to store instructions, program code, some data, or the like. The memory 1804 may be located inside the electronic device 1800, or may be located outside the electronic device 1800. This is not limited. The processor 1801 is configured to execute the instructions stored in the memory 1804, to implement the methods provided in the foregoing embodiments of this application.

In an example, the processor 1801 may include one or more processors, for example, a processor 0 and a processor 1 in FIG. 18.

In an optional implementation, the electronic device 1800 includes a plurality of processors. For example, in addition to the processor 1801 in FIG. 18, the electronic device 1800 may further include a processor 1809.

In an optional implementation, the electronic device 1800 further includes an output device 1805 and an input device 1806. For example, the input device 1806 is a device such as a keyboard, a mouse, a microphone, or a joystick, and the output device 1805 is a device such as a display or a speaker (speaker).

It should be noted that the electronic device 1800 may be a chip system or a device having a structure similar to that in FIG. 18. The chip system may include a chip, or may include a chip and another discrete device. Actions, terms, and the like in embodiments of this application may be mutually referenced. This is not limited. In embodiments of this application, names of messages exchanged between devices, names of parameters in the messages, or the like are merely examples. Other names may alternatively be used during specific implementation. This is not limited. In addition, a composition structure shown in FIG. 18 does not constitute a limitation on the electronic device 1800. In addition to the components shown in FIG. 18, the electronic device 1800 may include more or fewer components than those shown in FIG. 18, or some components may be combined, or different component arrangements may be used.

The processor and the transceiver described in this application may be implemented in an integrated circuit (integrated circuit, IC), an analog IC, a radio frequency integrated circuit, a mixed signal IC, an application-specific integrated circuit (application-specific integrated circuit, ASIC), a printed circuit board (printed circuit board, PCB), an electronic device, or the like. The processor and the transceiver may alternatively be manufactured by using various IC process technologies, for example, a complementary metal oxide semiconductor (complementary metal oxide semiconductor, CMOS), an n-type metal oxide semiconductor (n-type Metal oxide semiconductor, NMOS), a p-type metal oxide semiconductor (p-type metal oxide semiconductor, PMOS), a bipolar junction transistor (Bipolar Junction Transistor, BJT), a bipolar CMOS (BiCMOS), silicon germanium (SiGe), and gallium arsenide (GaAs).

FIG. 19 is a diagram of a structure of another electronic device according to an embodiment of this application. The electronic device may be an encoding apparatus or a decoding apparatus, a chip or a function module in the encoding apparatus, or a chip or a function module in the decoding apparatus. For ease of description, FIG. 19 shows only main components of the electronic device, including a processor 1901, a memory 1902, a control circuit 1903, and an input/output apparatus 1904. The processor 1901 is mainly configured to: process a communication protocol and communication data, execute a software program, and process data of the software program. The memory 1902 is mainly configured to store the software program and data. The control circuit 1903 is mainly configured to supply power and transmit various electrical signals. The input/output apparatus 1904 is mainly configured to: receive data input by a user, and output data to the user.

When the electronic device is the processor 1901, the control circuit 1903 may be a mainboard. The memory 1902 includes a medium having a storage function, for example, a hard disk, a RAM, or a ROM. The processor 1901 may include a baseband processor 1901 and a central processing unit. The baseband processor is mainly configured to process the communication protocol and the communication data. The central processing unit is mainly configured to: control the entire electronic device, execute the software program, and process the data of the software program. The input/output apparatus 1904 includes a display screen, a keyboard, a mouse, and the like. The control circuit 1903 may further include or be connected to a transceiver circuit or a transceiver, for example, a network cable interface, and is configured to send or receive data or a signal, for example, perform data transmission and communication with another device. Further, the electronic device may further include an antenna, configured to receive and send a radio signal, and configured to perform data/signal transmission with another device.

An embodiment of this application further provides an encoding apparatus. The apparatus includes at least one processor. When the at least one processor executes program code or instructions, the foregoing related method steps are implemented to implement the encoding method in the foregoing embodiments.

Optionally, the apparatus may further include at least one memory, and the at least one memory is configured to store the program code or the instructions.

An embodiment of this application further provides a decoding apparatus. The apparatus includes at least one processor. When the at least one processor executes program code or instructions, the foregoing related method steps are implemented to implement the decoding method in the foregoing embodiments.

Optionally, the apparatus may further include at least one memory, and the at least one memory is configured to store the program code or the instructions.

An embodiment of this application further provides a computer storage medium. The computer storage medium stores computer instructions. When the computer instructions are run on a communication apparatus, the communication apparatus is enabled to perform the foregoing related method steps to implement the encoding method and the decoding method in the foregoing embodiments.

An embodiment of this application further provides a computer program product. When the computer program product is run on a computer, the computer is enabled to perform the foregoing related steps to implement the encoding method and the decoding method in the foregoing embodiments.

An embodiment of this application further provides an encoding apparatus. The apparatus may be specifically a chip, an integrated circuit, a component, or a module. Specifically, the apparatus may include a connected processor and a memory configured to store instructions, or the apparatus includes at least one processor, configured to obtain instructions from an external memory. When the apparatus runs, the processor may execute the instructions, so that the chip performs the encoding method in the foregoing method embodiments.

An embodiment of this application further provides a decoding apparatus. The apparatus may be specifically a chip, an integrated circuit, a component, or a module. Specifically, the apparatus may include a connected processor and a memory configured to store instructions, or the apparatus includes at least one processor, configured to obtain instructions from an external memory. When the apparatus runs, the processor may execute the instructions, so that the chip performs the decoding method in the foregoing method embodiments.

An embodiment of this application further provides a bitstream storage method. The method includes: obtaining and storing a bitstream obtained by using the foregoing encoding method and decoding method.

An embodiment of this application further provides a bitstream storage apparatus. The apparatus is configured to obtain and store a bitstream obtained by using the foregoing encoding method and decoding method.

An embodiment of this application further provides a bitstream transmission method. The method includes: obtaining and transmitting a bitstream obtained by using the foregoing encoding method and decoding method.

An embodiment of this application further provides a bitstream transmission apparatus. The apparatus is configured to obtain and transmit a bitstream obtained by using the foregoing encoding method and decoding method.

An embodiment of this application further provides a computer-readable storage medium. The computer-readable storage medium stores a bitstream obtained by using the foregoing encoding method and decoding method.

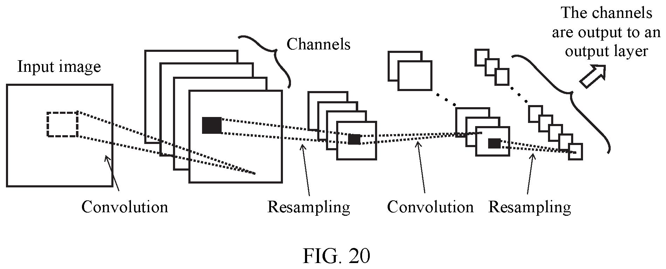

FIG. 20 schematically illustrates a general concept of processing based on a neural network such as a convolutional neural network (convolutional neural network, CNN). The convolutional neural network includes an input layer, an output layer, and a plurality of hidden layers. The input layer is a layer that provides an input (for example, a part of an input image shown in FIG. 20) for processing. The hidden layers of the CNN usually include a series of convolutional layers, which are convolved with multiplication or other dot products. A result of a layer is one or more feature maps (represented by empty rectangles constituted by solid lines), sometimes referred to as a channel. Resampling (such as subsampling) may be involved at a part or all of layers. Therefore, the feature map may become smaller, as shown in FIG. 20. It is noted that convolution of a stride length can also reduce a size of the input feature map (resampling). An activation function of the CNN is usually a ReLU (rectified linear unit) layer, followed by additional convolution, such as a pooling layer, a fully connected layer, and a normalization layer, which are referred to as the hidden layers for inputs and outputs of the pooling layer, the fully connected layer, and the normalization layer being hidden by the activation function and final convolution. Although these layers are commonly referred to as the convolution, this is only a convention. Mathematically, the convolution is technically a sliding dot product or cross-correlation. This is important for an index of a matrix because the convolution affects how to determine a weight at a particular index point.

When a CNN is programmed to process an image, as shown in FIG. 20, an input is a tensor having a shape of (image quantity)×(image width)×(image height)×(image depth). It should be known that the image depth may include a channel of the image. After passing through the convolutional layers, the image is abstracted as a feature map having a shape of (image quantity)×(feature map width)×(feature map height)×(feature map channel). The convolutional layer of the neural network should have the following attributes: a convolution kernel (hyperparameter) defined by a width and a height; quantities (hyperparameters) of input and output channels; and a depth (input channel) of a convolutional filter being equal to a channel quantity (depth) of an input feature map.

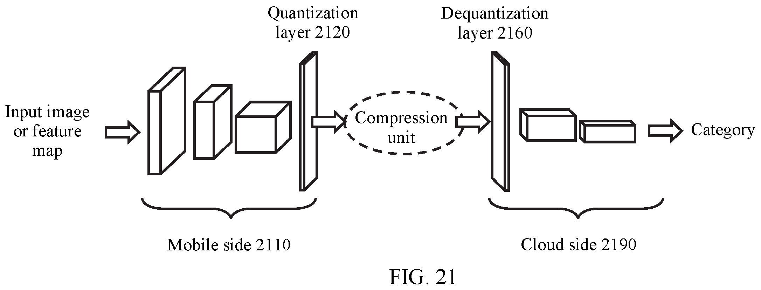

Video coding for machine (VCM) is another popular direction of computer science. A main idea for this method is transmitting a coded representation of image or video information for further processing by a computer vision (CV) algorithm, such as object segmentation, detection, and recognition. In comparison with conventional image and video coding that targets human perception, quality features, for example, object detection precision instead of reconstructed quality, are performance of a computer vision task. As shown in FIG. 21,
the video coding for machine, also known as collaborative intelligence, is a new paradigm for efficiently deploying deep neural networks in mobile cloud infrastructure. Network division is performed between a mobile side 2110 and a cloud side 2190 (for example, a cloud server), to allocate computational workload to minimize total energy and/or a delay of a system. In general, the collaborative intelligence is a paradigm in which processing of a neural network is distributed between two or more different compute nodes, for example, devices, but generally, any nodes defined by functions. Herein, the term "node" does not refer to the foregoing neural network node. Instead, the (compute) nodes herein refer to (physically or at least logically) independent devices/modules that implement a part of the neural network. Such a device may be a mixture of different servers, different end user equipments, servers and/or user equipments and/or clouds and/or processors, and the like. In other words, the compute nodes may be considered as nodes belonging to a same neural network, and communicate with each other to transmit encoded data within/for the neural network. For example, to perform complex computation, one or more layers may be performed on a first device (such as a device on the mobile side 2110), and one or more layers may be performed on another device (such as a cloud server on the cloud side 2190). However, distributions may alternatively be more refined, and a single layer may be performed on a plurality of devices. In this disclosure, the term "a plurality of" means two or more. In some existing solutions, a part of a neural network function is performed on one or more devices (user equipments, edge devices, or the like), and an output (feature map) is transferred to a cloud. The cloud is a collection of processing or computing systems located outside a device that is operating the part of the neural network. A concept of the collaborative intelligence is also extended to model training. In this case, data flows bidirectionally: from the cloud to a mobile device in a back propagation process of training, and from the mobile device to the cloud in a forward transfer and inference process of training (as shown in FIG. 21).

Some work proposes semantic image compression by encoding deep features and reconstructing an input image from the deep features. Uniform quantization-based compression is shown, followed by context-adaptive binary arithmetic coding (CABAC) from H.264. In some scenarios, sending an output of a hidden layer (depth feature map) from the mobile component 2110 to the cloud 2190 may be more efficient, instead of sending compressed natural image data to the cloud and performing object detection based on a reconstructed image. Therefore, a quantization layer 2120 may be included by the mobile side 2110 for compression of data (features) generated by the mobile side 2110. Correspondingly, the cloud side 2190 may include a dequantization layer 2160. Effective compression of feature maps is beneficial to image and video compression and reconstruction of human perception and machine vision. An entropy coding method, such as arithmetic coding, is a popular method for compressing deep features (for example, feature maps).

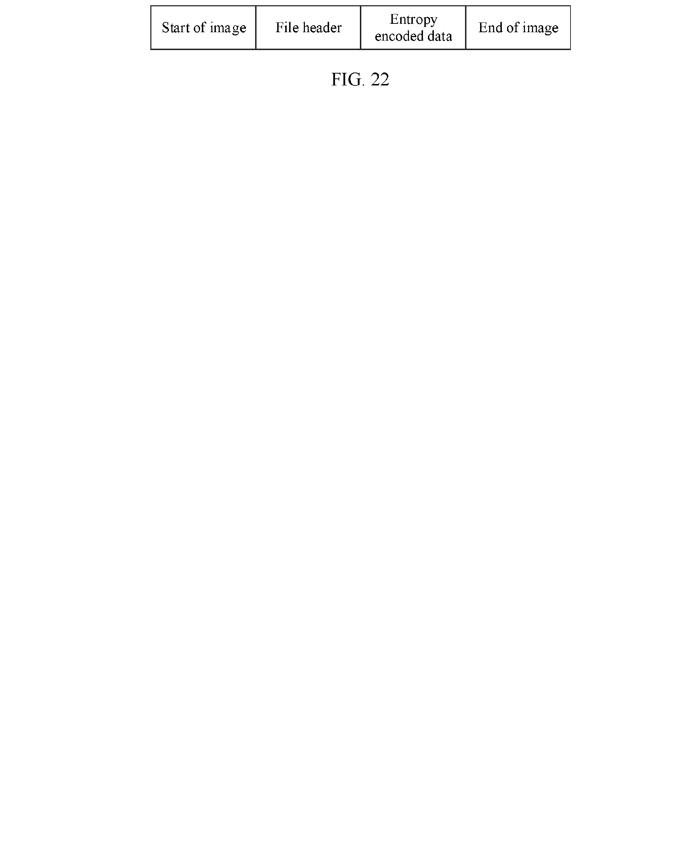

FIG. 22 shows a structure of a bitstream according to an embodiment of this application. As shown in FIG. 22, the bitstream includes a start of image (start of image), a file header (file header), entropy encoded data (entropy encoded data), and an end of image (end of image).

In a possible implementation, the channel quantity information, the first location information, the second location information, or the bitstream length information may be stored in the file header.

In a possible implementation, the channel quantity information, the first location information, the second location information, or the bitstream length information may be stored in the entropy encoded data.

The apparatus, the computer storage medium, the computer program product, or the chip provided in embodiments are all configured to perform the corresponding methods provided above. Therefore, for beneficial effect that can be achieved by the apparatus, the computer storage medium, the computer program product, or the chip, refer to beneficial effect of the corresponding methods provided above. Details are not described herein again.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint constraints of the technical solutions. A skilled person may use different methods to implement the described functions for each particular application, but it should not be considered that the implementation goes beyond the scope of embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in embodiments of this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electronic, mechanical, or another form.

The foregoing units described as separate parts may or may not be physically separate, and parts displayed as units may or may not be physical units, may be located in one position, or may be distributed on a plurality of network units. A part or all of the units may be selected based on an actual requirement to achieve the objectives of the solutions of embodiments.

In addition, function units in embodiments of this application may be integrated into one processing unit, or each of the units may exist alone physically, or two or more units are integrated into one unit.

When the functions are implemented in a form of a software function unit and sold or used as an independent product, the functions may be stored in a computer-readable storage medium. Based on such an understanding, the technical solutions of embodiments of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform a part or all of the steps of the methods described in embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or an optical disc.

The foregoing descriptions are merely specific implementations of embodiments of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. An encoding method, comprising:
performing artificial intelligence AI encoding on an input image to obtain a first feature map of the input image;
determining N groups of second feature maps of the input image based on the first feature map, wherein N is a positive integer; and
entropy encoding a first group of second feature maps in the N groups of second feature maps into a bitstream.

2. The method according to claim 1, wherein the method further comprises:
entropy encoding a second group of second feature maps in the N groups of second feature maps into the bitstream.

3. The method according to claim 1 or 2, wherein the method further comprises:
entropy encoding a third group of second feature maps in the N groups of second feature maps into the bitstream.

4. The method according to any one of claims 1 to 3, wherein the determining the N groups of second feature maps of the input image based on the first feature map comprises:
performing channel separation on the first feature map to obtain M second feature maps of the input image, wherein M is a positive integer; and
grouping the M second feature maps based on channel information of second feature maps of the input image to obtain the N groups of second feature maps.

5. The method according to claim 4, wherein the channel information comprises channel entropies and/or channel variances, the channel entropies are entropies of all elements in a channel, and the channel variances are variances of all the elements in the channel.

6. The method according to any one of claims 1 to 5, wherein the method further comprises:
entropy encoding at least one of the N groups of second feature maps into the bitstream in descending order of channel entropies or channel variances.

7. The method according to any one of claims 1 to 6, wherein the method further comprises:
encoding channel quantity information into the bitstream, wherein the channel quantity information indicates a channel quantity of at least one group of second feature maps encoded into the bitstream.

8. The method according to any one of claims 1 to 7, wherein the method further comprises:
encoding first location information into the bitstream, wherein the first location information indicates locations, in the first feature map, of the at least one group of second feature maps encoded into the bitstream.

9. The method according to any one of claims 1 to 8, wherein the method further comprises:
encoding second location information into the bitstream, wherein the second location information indicates locations, in the bitstream, of the at least one group of second feature maps encoded into the bitstream.

10. A decoding method, comprising:
performing entropy decoding on a bitstream to obtain a first group of second feature maps of an input image, wherein the first group of second feature maps is a part of feature maps corresponding to the input image; and
performing AI decoding on the first group of second feature maps to obtain a first reconstructed image of the input image.

11. The method according to claim 10, wherein the method further comprises:
performing entropy decoding on the bitstream to obtain a second group of second feature maps, wherein the second group of second feature maps is a part of feature maps corresponding to the input image; and
performing AI decoding on the first group of second feature maps and the second group of second feature maps to obtain a second reconstructed image of the input image.

12. The method according to claim 11, wherein the method further comprises:
performing entropy decoding on the bitstream to obtain a third group of second feature maps, wherein the third group of second feature maps is a part of feature maps corresponding to the input image; and
performing AI decoding on the first group of second feature maps, the second group of second feature maps, and the third group of second feature maps to obtain a third reconstructed image of the input image.

13. The method according to claim 12, wherein image quality of the second reconstructed image is better than image quality of the first reconstructed image, and image quality of the third reconstructed image is better than image quality of the second reconstructed image, wherein the image quality is represented by any one of the following variables: a peak signal-to-noise ratio PSNR, a multi-scale structural similarity index measure MS-SSIM, or a learned perceptual image patch similarity LPIPS.

14. The method according to any one of claims 10 to 13, wherein the method further comprises:
decoding the bitstream to obtain channel quantity information, wherein the channel quantity information indicates a channel quantity of at least one group of second feature maps obtained through decoding; and
performing AI decoding on the first group of second feature maps based on the channel quantity information to obtain the first reconstructed image.

15. The method according to any one of claims 10 to 14, wherein the method further comprises:
decoding the bitstream to obtain first location information, wherein the first location information indicates locations, of the at least one group of second feature maps obtained through decoding, in a first feature map of the input image; and
performing AI decoding on the first group of second feature maps based on the first location information to obtain the first reconstructed image.

16. The method according to any one of claims 11 to 15, wherein the method further comprises:
decoding the bitstream to obtain second location information, wherein the second location information indicates locations, of the at least one group of second feature maps obtained through decoding, in the bitstream; and
determining, based on the second location information, bit data corresponding to the first group of second feature maps in the bitstream, and performing entropy decoding on the corresponding bit data to obtain the first group of second feature maps.

17. An encoding apparatus, comprising an encoding unit and a determining unit, wherein
the encoding unit is configured to perform AI encoding on an input image to obtain a first feature map of the input image;
the determining unit is configured to determine N groups of second feature maps of the input image based on the first feature map, wherein N is a positive integer; and
the encoding unit is further configured to entropy encode a first group of second feature maps in the N groups of second feature maps into a bitstream.

18. The apparatus according to claim 17, wherein the encoding unit is further configured to:
entropy encode a second group of second feature maps in the N groups of second feature maps into the bitstream.

19. The apparatus according to claim 17 or 18, wherein the encoding unit is further configured to:
entropy encode a third group of second feature maps in the N groups of second feature maps into the bitstream.

20. The apparatus according to any one of claims 17 to 19, wherein the determining unit is specifically configured to:
perform channel separation on the first feature map to obtain M second feature maps of the input image, wherein M is a positive integer; and
group the M second feature maps based on channel information of second feature maps of the input image to obtain the N groups of second feature maps.

21. The apparatus according to any one of claims 17 to 20, wherein the encoding unit is further configured to:
entropy encode at least one of the N groups of second feature maps into the bitstream in descending order of channel entropies or channel variances.

22. A decoding apparatus, comprising a decoding unit and a reconstruction unit, wherein
the decoding unit is configured to perform entropy decoding on a bitstream to obtain a first group of second feature maps of an input image, and the first group of second feature maps is a part of feature maps corresponding to the input image; and
the reconstruction unit is configured to perform AI decoding on the first group of second feature maps to obtain a first reconstructed image of the input image.

23. The apparatus according to claim 22, wherein the decoding unit is further configured to perform entropy decoding on the bitstream to obtain a second group of second feature maps, and the second group of second feature maps is a part of feature maps corresponding to the input image; and
the reconstruction unit is further configured to perform AI decoding on the first group of second feature maps and the second group of second feature maps to obtain a second reconstructed image of the input image.

24. The apparatus according to claim 23, wherein the decoding unit is further configured to perform entropy decoding on the bitstream to obtain a third group of second feature maps, and the third group of second feature maps is a part of feature maps corresponding to the input image; and
the reconstruction unit performs AI decoding on the first group of second feature maps, the second group of second feature maps, and the third group of second feature maps to obtain a third reconstructed image of the input image.

25. The apparatus according to claim 24, wherein image quality of the second reconstructed image is better than image quality of the first reconstructed image, and image quality of the third reconstructed image is better than image quality of the second reconstructed image, wherein the image quality is represented by any one of the following variables: a PSNR, an MS-SSIM, or an LPIPS.

26. An encoding apparatus, comprising at least one processor and a memory, wherein the at least one processor executes a program or instructions stored in the memory, to enable the encoding apparatus to implement the method according to any one of claims 1 to 9.

27. A decoding apparatus, comprising at least one processor and a memory, wherein the at least one processor executes a program or instructions stored in the memory, to enable the decoding apparatus to implement the method according to any one of claims 10 to 16.

28. A bitstream storage method, comprising: obtaining and storing a bitstream obtained by using the method according to any one of claims 1 to 16.

29. A bitstream storage apparatus, wherein the apparatus is configured to obtain and store a bitstream obtained by using the method according to any one of claims 1 to 16.

30. A bitstream transmission method, comprising: obtaining and transmitting a bitstream obtained by using the method according to any one of claims 1 to 16.

31. A bitstream transmission apparatus, wherein the apparatus is configured to obtain and transmit a bitstream obtained by using the method according to any one of claims 1 to 16.

32. A computer-readable storage medium, wherein the computer-readable storage medium stores a bitstream obtained by using the method according to any one of claims 1 to 16.

33. A computer-readable storage medium, configured to store a computer program, wherein when the computer program is run on a computer or a processor, the computer or the processor is enabled to implement the method according to any one of claims 1 to 16.

34. A computer program product, wherein the computer program product comprises instructions, and when the instructions are run on a computer or a processor, the computer or the processor is enabled to implement the method according to any one of claims 1 to 16.
